# EUROPÄISCHE PATENTSCHRIFT

(11) **EP 1 231 129 B1**
(45) Veröffentlichungstag und Bekanntmachung des Hinweises auf die Patenterteilung: **05.04.2006**
(21) Anmeldenummer: 02002817.1
(22) Anmeldetag: 08.02.2002
(51) Int. Cl.: B62D 27/04, B62D 24/02

(54) **Lastfahrzeug**
Truck
Camion

(30) Priorität: 13.02.2001 DE 10106495
(43) Veröffentlichungstag der Anmeldung: 14.08.2002
(73) Patentinhaber: Crossmobil GmbH, 77656 Offenburg (DE)
(72) Erfinder: Pfaff, Bertold, 79183 Waldkirch-Siensbach (DE); Mayer, Josef, 77749 Hohberg (DE)
(74) Vertreter: Maucher, Wolfgang

(56) Entgegenhaltungen:
- EP-A- 0 016 469
- DE-A- 1 655 096

## Beschreibung

Die Erfindung betrifft ein Lastfahrzeug mit einem biegesteifen, aber verwindungsweichen Fahrgestellrahmen, auf dem ein verwindbarer Hilfsrahmen angeordnet ist, der einen biege- und verwindungssteifen, eine Bodenplatte und/oder Quertraversen aufweisenden Aufbau trägt, der zur Verbesserung seiner Torsionssteifigkeit ein sich in Fahrzeuglängsrichtung erstreckendes rohrförmiges Hohlprofil aufweist, wobei der Aufbau an wenigstens drei Punkten über Bewegungslager mit dem Hilfsrahmen verbunden ist, wobei wenigstens eines dieser Bewegungslager als Schwenklager ausgebildet ist, dessen Schwenkachse etwa in der Fahrzeuglängsmittelachse verläuft, und wobei wenigstens zwei der Bewegungslager als Auflager ausgebildet sind, die seitlich beidseits der Schwenkachse angeordnet und in Fahrzeuglängsrichtung von dem Schwenklager beabstandet sind.

Ein gattungäßigen last fahrzeug, gemäß dem oberbegriff des Anspruchs 1, ist im Dokument EP-A-0 0164 409 beschrieben.

Derartige Lastfahrzeuge müssen in der Lage sein, erhebliche Bodenunebenheiten zu überwinden, ohne daß sich dabei der Aufbau verwindet. Solche Bodenunebenheiten treten nicht nur im befestigtem, sondern vor allem auch in unbefestigtem Gelände auf. Ein Lastfahrzeug der eingangs genannten Art ist aus EP 0 583 750 B1 bekannt. Es weist einen verwindungssteifen Pritschenaufbau auf, der zur Verbesserung seiner Torsionssteifigkeit an seiner Unterseite ein sich in der Fahrzeuglängsmitte erstreckendes zylindrisches Zentralrohr hat, an dem beidseits seitlich eine Vielzahl von etwa parallel zur Bodenplatte des Aufbaus verlaufenden Quertraversen abstehen, die mit der Unterseite der die Ladefläche aufweisenden Bodenplatte des Aufbaus verbunden sind. Das Zentralrohr ist über eine einzige Dreipunktlagerung mit dem auf dem Fahrgestellrahmen angeordneten Hilfsrahmen verbunden. Die Dreipunktlagerung hat im hinteren Fahrzeugbereich ein Schwenklager, an dem das Zentralrohr um seine Längsmittelachse relativ zu dem Hilfsrahmen verschenkbar ist. Das Schwenklager weist zwei mit dem Hilfsrahmen verbundene halbkreisförmige Lagerschalen auf, die das Zentralrohr umgreifen. In axialer Richtung ist das Schwenklager als Festlager ausgebildet. Die Dreipunktlagerung hat als weitere Lagerstellen zwei Gleit- oder Auflager die seitlich beidseits der Schwenkachse in Fahrzeuglängsrichtung etwa in der Mitte des Aufbaus angeordnet sind.

Das vorbekannte Lastfahrzeug hat den Nachteil, daß das an der Unterseite des Aufbaus angeordnete Zentral noch einen vergleichsweise großen Querschnitt erfordert, um eine ausreichende Torsionssteifigkeit des Aufbaus zu erreichen. Da das Zentralrohr oberhalb des Hilfsrahmens mit Abstand von diesem angeordnet ist, um beim Verwinden des Fahrgestells eine Relativbewegung zwischen dem Hilfsrahmen und dem Aufbau zu ermöglichen, ist die über dem Zentralrohr angeordnete Bodenplatte des Pritschenaufbaus in einem relativ großen Abstand vom Erdboden angeordnet, daß heißt, das Lastfahrzeug weist im Bereich des Aufbaus noch eine vergleichsweise große Bauhöhe auf. Vor allem bei beladenem Fahrzeug ergibt sich dadurch ein entsprechend hoher Schwerpunkt, wodurch die Geländegängigkeit des Lastfahrzeugs eingeschränkt ist. Ungünstig ist außerdem, daß die Herstellung des Aufbaus noch vergleichsweise aufwendig ist, da an dem Zentralrohr und dem Bodenblech eine Vielzahl von Quertraversen angebracht werden müssen. Im Bereich der Quertraversen ergeben sich Kanten und Ecken, die schlecht zugänglich sind und zur Korrosion neigen. Schließlich weist der Aufbau auch noch ein vergleichsweise großes Gewicht auf, wodurch die Nutzlast des Lastfahrzeugs vermindert wird.

Es besteht deshalb die Aufgabe, ein Lastfahrzeug der eingangs genannten Art zu schaffen, daß eine gute Geländegängigkeit aufweist, bei dem der Aufbau beim Verwinden des Fahrgestellrahmens weitestgehend verwindungsfrei bleibt und das kostengünstig herstellbar ist sowie eine gute Korrosionsbeständigkeit ermöglicht.

Die Lösung dieser Aufgabe besteht darin, daß der Aufbau wenigstens zwei der sich in Fahrzeuglängsrichtung erstreckenden rohrförmigen Hohlprofile aufweist, die seitlich voneinander beabstandet und über die Bodenplatte und/oder die Quertraversen miteinander verbunden sind, und daß der zwischen diesen Hohlprofilen gebildete Zwischenraum als Bewegungsfreiraum zur Aufnahme von Teilbereichen des Hilfsrahmens bei der beim Verwinden von Fahrgestellrahmen und Hilfsrahmen zwischen diesem und dem Aufbau auftretenden Relativbewegung ausgebildet ist.

Der Aufbau weist also zur Verbesserung seiner Torsionssteifigkeit wenigstens zwei Hohlprofile auf, die beidseits des Hilfsrahmens angeordnet sind, so daß Teilbereiche des Hilfsrahmens und gegebenenfalls des Fahrgestellrahmens, insbesondere die Eckbereiche des Hilfsrahmens, beim Verwinden von Fahrgestell- und Hilfsrahmen in den zwischen den Hohlprofilen gebildeten Bewegungsfreiraum verschwenken können. In vorteilhafter Weise ergibt sich dadurch eine niedrige Ladefläche beziehungsweise ein niedriger Laderaum, so daß das Lastfahrzeug vor allem in beladenem Zustand einen tiefen Schwerpunkt und eine gute Geländegängigkeit aufweist. Da wenigstens zwei Hohlprofile vorgesehen sind, können die Querschnittsabmessungen dieser Hohlprofile kleiner gewählt werden als bei einem Aufbau, der nur ein einziges, in der Längsmittelachse des Lastfahrzeugs angeordnetes Hohlprofil aufweist, wodurch die Bauhöhe des Aufbaus reduziert wird. Die Hohlprofile sind vorzugsweise an der Unterseite des Aufbaus angeordnet.

Die durch den Bewegungsfreiraum voneinander beabstandeten Hohlprofile ermöglichen im Vergleich zu einem Aufbau mit einem einzigen zentral angeordneten Hohlprofil eine gleichmäßigere Unterstützung der Bodenplatte, wodurch die Anzahl der an der Unterseite der Bodenplatte angeordneten Quertraversen erheblich reduziert werden kann. In vorteilhafter Weise ergibt sich dadurch einerseits ein geringeres Gewicht des Aufbaus und andererseits, auch eine gute Korrosionsbeständigkeit, da die Anzahl der Ecken und Kanten, die Ausgangspunkte für Korrosion bilden können, erheblich reduziert ist.

Bei einer Ausführungsform der Erfindung ist vorgesehen, daß der Aufbau an drei Punkten über Bewegungslager mit dem Hilfsrahmen verbunden ist, daß das Schwenklager am vorderen oder hinteren Endbereich des Aufbaus und die beiden Auflager an dem gegenüberliegenden Endbereich des Aufbaus angeordnet sind. Eine derartige Dreipunktlagerung ist vor allem bei kleinen Lastfahrzeugen oder kurzen Aufbauten zweckmäßig.

Bei einer anderen vorteilhaften Ausführungsform der Erfindung ist der Aufbau an wenigstens vier Punkten über Bewegungslager mit dem Hilfsrahmen verbunden, wobei ein erstes Schwehklager am vorderen Endbereich des Aufbaus und ein zweites Schwenklager am hinteren Endbereich des Aufbaus angeordnet ist, wobei die Schwenkachsen dieser Schwenklager zueinander fluchten und jeweils etwa in der Fahrzeuglängsmittelachse verlaufen, und wobei zwischen diesen Schwenklagern in Fahrzeuglängsrichtung etwa mittig zum Aufbau die wenigstens zwei Auflager angeordnet sind. Eine solche Lageranordnung ist vor allem für große Lastfahrzeuge geeignet. Dabei ist es sogar möglich, daß im Bereich der mittleren Länge des Aufbaus beidseits der Schwenkachse jeweils zwei Auflager angeordnet sind, die in Fahrzeuglängsrichtung voneinander beabstandet sind.

Bei einer besonders vorteilhaften Ausführungsform der Erfindung ist vorgesehen, daß der Aufbau an wenigstens vier Punkten über Bewegungslager mit dem Hilfsrahmen verbunden ist, daß dazu ein erstes Schwenklager am vorderen Endbereich des Aufbaus und ein zweites Schwenklager am hinteren Endbereich des Aufbaus angeordnet ist, daß die Schwenkachsen dieser Schwenklager zueinander fluchten und jeweils etwa in der Fahrzeuglängsmittelachse verlaufen, und daß zwischen diesen Schwenklagern in Fahrzeuglängsrichtung etwa mittig zum Aufbau die wenigstens zwei Auflager angeordnet sind. In vorteilhafter Weise erfüllt das Bodenblech dann eine Doppelfunktion, nämlich einerseits als Ladefläche zu dienen und andererseits aber auch einen Wandungsbereich des torsionssteifen Hohlprofil zu bilden. Der Aufbau weist dadurch trotz einer hohen Biege- und Torsionssteifigkeit nur ein vergleichsweise geringes Gewicht auf.

Bei einer bevorzugten Ausführungsform der Erfindung sind die rohrförmigen Hohlprofile als Kastenprofile ausgebildet, die jeweils ein in Umfangsrichtung offenes Hohlprofilteil aufweisen, daß vorzugsweise im Querschnitt etwa U-, V- oder trapezförmig ausgebildet ist, und daß die Kastenprofilteile an ihren Längsrändern vorzugsweise durch Schweißnähte mit der Bodenplatte zu einem in Umfangsrichtung geschlossenen Hohlprofil verbunden sind. Dadurch kann einerseits eine besonders hohe Biegesteifigkeit des Aufbaus erreicht werden und andererseits ermöglichen die mit dem Bodenblech verbundenen offenen Hohlprofilteile aber auch eine kostengünstige Herstellung des Aufbaus. Dabei ist es sogar möglich, daß die Hohlprofilteile mehr als ein viertel oder sogar mehr als ein drittel der Fläche des Bodens des Aufbaus abdecken. Darüberhinaus kann die Innenhöhlung der Kastenprofile ein Ablage genutzt werden, beispielsweise um dort eine Abschleppstange, eine Plangestell-Längsröhre und/oder Werkzeug unterzubringen.

Die Hohlprofilteile können als Biegeteile aus einer preiswert im Handel verfügbaren und beschaffbaren Blechtafel geformt werden. Schließlich ermöglichen die Biegeteile auch eine einfache Bevorratung der für die Herstellung des Aufbaus benötigten Werkstoffe, da für unterschiedlich große Lastfahrzeuge vorgesehene, unterschiedliche Querschnittsabmessungen aufweisende Kastenprofile aus dem gleichen Blechen hergestellt werden können.

Vorteilhaft ist, wenn sich der Querschnitt wenigstens eines Hohlprofils ausgehend vom unteren zum oberen Ende des Hohlprofil erweitert und wenn dazu wenigstens ein Längsseitenwandbereich des Hohlprofils schräg zur Erstreckungsebene des Aufbaus angeordnet ist. Im Bereich der Fahrzeuglängsmittelachse abgewandten, schräg angeordneten äußeren Seitenwand des Hohlprofils ist dann ein zusätzlicher Freiraum gebildet, in den die Räder auf unebenem Gelände verschwenken können. Bei einer schräg angeordneten inneren Seitenwand des Hohlprofils ergibt sich ein zusätzlicher Bewegungsfreiraum zwischen den Hohlprofilen, in den Teilbereiche des Hilfsrahmens beim Verwinden von Fahrgestell- und Hilfsrahmen relativ zu dem Aufbau verschwenken können.

Vorteilhaft ist, wenn die Hohlprofile durch Quertraversen miteinander verbunden sind und wenn die Quertraversen vorzugsweise an den Bewegungslagern angeordnet sind. Die Quertraversen können dann mit den Lageroberteilen der Bewegungslager verbunden sein, so daß die Stützkräfte der Bewegungslager besonders gut auf die Hohlprofile übertragen werden können. Darüberhinaus wird durch die Quertraversen die Torsionssteifigkeit des Aufbaus zusätzlich verbessert.

Bei einer vorteilhaften Ausführungsform der Erfindung ist vorgesehen, daß wenigstens eine an einem Schwenklager angeordnete Quertraverse an ihren mit den Hohlprofilen verbundenen Endbereichen unterseitig Aussparungen aufweist, in die ein darunter befindlicher Teilbereich des Hilfsrahmens beim Verwinden von Fahrgestellrahmen und Hilfsrahmen verschwenkbar ist, und daß ein zwischen diesen Aussparungen angeordneter Basisbereich der Quertraverse mit dem Lageroberteil des Schwenklagers verbunden ist. Die Quertraverse weist dann in dem Basisbereich einen größeren tragenden Querschnitt auf als an den Endbereichen der Quertraverse, was eine hohe Belastbarkeit des Aufbaus ermöglicht. Dennoch ergibt sich im Bereich der an den Enden der Quertraverse vorgesehenen Aussparungen ein Bewegungsfreiraum, in den Teilbereiche des Hilfsrahmens bei einer zwischen dem Hilfsrahmen und dem Aufbau auftretenden Relativbewegung verschwenken können. Das Lastfahrzeug ermöglicht deshalb kompakte Abmessungen, einen niedrige Ladefläche und einen tiefen Schwerpunkt.

Vorteilhaft ist, wenn wenigstens eine an den Auflagern angeordnete Quertraverse an ihren mit den Hohlprofilen verbundenen Endbereichen unterseitig Aussparungen aufweist und daß die Auflager in diesen Aussparungen angeordnet sind. Dadurch ergibt ein kompakt aufgebauter Aufbau mit einem niedrigen Schwerpunkt.

Bei einer zweckmäßigen Ausgestaltung der Erfindung verjüngt sich der Basisbereich der Quertraverse oder dessen Projektion in eine orthogonal zur Fahrzeuglängsrichtung verlaufende Ebene etwa trapezförmig nach unten. Der Basisbereich weist dann im wesentlichen gerade Randbereiche oder Randabschnitte auf und ist dadurch auf einfache Weise herstellbar.

Bei einer Ausführungsform der Erfindung ist vorgesehen, daß das wenigstens eine Schwenklager und/oder ein Auflager ein mit dem Hilfsrahmen verbundenes Lagerunterteil und ein mit dem Aufbau verbundenes Lageroberteil aufweist, und daß der Aufbau über wenigstens einen, vorzugsweise das Lageroberteil und das Lagerunterteil durchsetzenden, durch die Vorspannkraft einer Feder belasteten Zuganker auf den Hilfsrahmen niedergespannt ist. Dadurch wird beim Verwinden von Fahrgestell- und Hilfsrahmen ein abhebenden Lageroberteils von dem Lagerunterteil vermieden. Vorteilhaft ist, wenn zwischen dem Lageroberteil und dem Lagerunterteil wenigstens eine, vorzugsweise von dem Zuganker durchsetzte elastomere Zwischenlage angeordnet ist. Dadurch ergibt sich eine wartungsfreie Schwenklagerung, die beim Auftreten von Relativbewegungen zwischen Hilfsrahmen und Aufbau praktisch keine Geräusche verursacht. Die elastomere Zwischenlage besteht vorzugsweise aus Gummi.

Bei einer zweckmäßigen Ausgestaltung der Erfindung weist die Feder wenigstens ein elastomeres Federelement und/oder wenigstens ein Teller-Federelement auf, wobei der Zuganker vorzugsweise das (die) Federelement(e) durchsetzt. Dadurch ergibt sich eine einfach aufgebaute und kompakte Lager-Niederhalteranordnung. Bei einer Feder mit einem elastomeren Federelement wird eine gute Korrosionsbeständigkeit der Feder erreicht. Eine Tellerfeder hat den Vorteil, daß sie verschleißbeständig und gegen UV-Licht unempfindlich ist.

Bei einer vorteilhaften Ausführungsform der Erfindung ist vorgesehen, daß das Lageroberteil und das Lagerunterteil der Schwenklagerung jeweils einen etwa parallel zur Bodenplatte verlaufenden plattenförmigen Lagerabschnitt aufweist, an den sich in Schwenkrichtung seitlich beidseits jeweils nach unten oder oben abgewinkelte plattenförmige Seitenflansche anschließen, daß zwischen den plattenförmigen Lagerabschnitten und den Seitenflanschen von Lageroberteil und Lagerunterteil die wenigstens eine elastische Zwischenlage vorgesehen ist, und daß zwischen dieser und wenigstens zwei der seitlich beidseits der beiden plattenförmigen Lagerabschnitte angeordneten Seitenflansche jeweils ein sich nach außen erweiternder Keilspalt vorgesehen ist. Dabei erweitern sich die Keilspalte, aus den von den plattenförmigen Lagerabschnitt zu dem diesem abgewandten freien Rand des betreffenden Seitenflanschs. Die Keilspalte bilden einen Bewegungsfreiraum für die Schwenkbewegung zwischen Lageroberteil und Lagerunterteil. Durch die plattenförmige Ausbildung der einzelnen Lagerabschnitte ist das Lager einfach und kostengünstig herstellbar, beispielsweise durch Biegeverformen eines entsprechenden Blechs. Außerdem ermöglichen die plattenförmigen Lagerabschnitte sowohl beim Verwinden des Fahrgestells als auch bei in Neutrallage befindlichem, unverwundenen Fahrgestell jeweils flächige Anlagestellen zwischen Lagerober- und Lagerunterteil, wodurch der durch die Lagerkräfte auf die elastische Zwischenlager ausgeübte Druck begrenzt und die elastische Zwischenlage somit geschont wird.

Vorteilhaft ist, wenn an wenigstens zwei einander gegenüberliegenden Seitenrandbereichen des elastomeren Federelements Seitenbegrenzungsanschläge für das elastomere Federelement angeordnet sind, die jeweils mit dem Lageroberteil oder dem Lagerunterteil verbunden sind. Dadurch wird bei zwischen dem Aufbau und dem Fahrgestell beziehungsweise dem damit verbundenen Hilfsrahmen auftretenden Relativbewegungen ein seitliches herausbewegen des elastomeren Federelements aus dem Bewegungslager vermieden.

Bei einer besonders vorteilhaften Ausführungsform der Erfindung ist wenigstens ein Schwenklager und/oder wenigstens ein Auflager als Hülsenfeder ausgebildet, vorzugsweise als Gummi-Metall-Lager. Derartige Hülsenfedern sind auch unter der Bezeichnung Silentbuchse bekannt. Sie ermöglichen eine geräuscharme und wartungsfreie Schwenklagerung.

Bei einer vorteilhaften Ausgestaltung der Erfindung sind die durch die Quertraversen miteinander verbunden Hohlprofile an den Längsaußenrändern des Aufbaus angeordnet. Der Aufbau kann dann im wesentlichen nur aus den Hohlprofilen und den Quertraversen bestehen, d.h. ein zusätzlicher Außenrahmen und ein die Hohlprofile miteinander verbindendes Bodenblech können entfallen. Der Aufbau bildet dann ein verwindungssteifes Tragwerk oder Tragegestell, auf dem Kastenaufbau, ein Container oder dergleichen angeordnet werden kann werden.
Nachfolgend sind Ausführungsbeispiele der Erfindung anhand der Zeichnung näher erläutert. Es zeigen:
- Fig. 1: eine Seitenansicht eines Lastfahrzeugs mit einem verwindungsweichen Fahrgestellrahmen, auf dem über einen Zwischenrahmen eine verwindungssteife Pritsche angeordnet ist,

- Fig. 2: eine Aufsicht auf eine Pritsche, die an vier Stellen über Bewegungslager mit einem Hilfsrahmen verbunden ist, wobei die Bodenplatte der Pritsche nicht dargestellt ist, um die Sicht auf die darunter befindlichen Kastenprofile freizugeben,
- Fig. 3: eine Ansicht auf die in Fig. 1 mit III. bezeichnete Querschnittsebene des Lastfahrzeugs, wobei ein dem Pritschenaufbau mit dem Hilfsrahmen verbindendes Schwenklager besonders gut erkennbar ist, und wobei der Fahrzeugrahmen in unverwundener Neutrallage angeordnet ist,
- Fig. 4: eine Darstellung ähnlich Fig. 3, wobei jedoch das Fahrgestell verwunden ist,
- Fig. 5: einen vergrößerten Ausschnitt aus Fig. 3, welcher das Schwenklager zeigt,

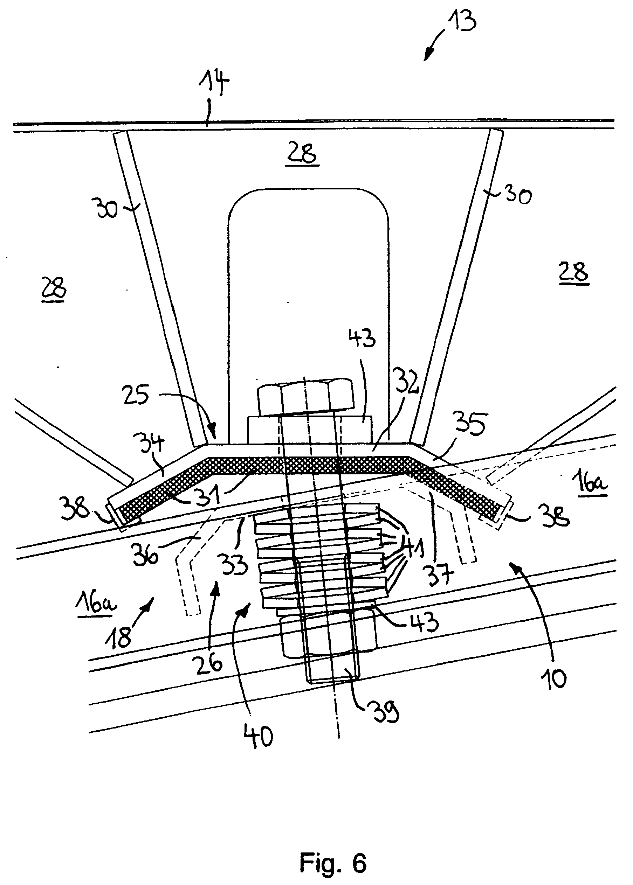

- Fig. 6: eine Darstellung ähnlich Fig. 5, wobei jedoch das Fahrgestell verwunden ist,
- Fig. 7: eine Ansicht auf das in Fig. 4 gezeigte Schwenklager von der dazu benachbarten Fahrzeuglängsaußenseite betrachtet,
- Fig. 8: eine Ansicht auf die in den Fig. 1 und 32 mit VIII bezeichnete Querschnittsebene, wobei die den Prit-schenaufbau mit dem Hilfsrahmen verbindenden Auf- oder Gleitlager besonders gut erkennbar sind,
- Fig. 9: eine Ansicht auf die Außenseite des Auflagers nach Fig. 8,

- Fig. 10: eine Rückseitenansicht des Auflagers, wobei das Fahrgestell, der Hilfsrahmen und der Aufbau nur teilweise dargestellt sind,
- Fig. 11: eine Darstellung ähnlich Fig. 1, wobei jedoch die Schwenklager jeweils eine Silentbuchse aufweisen,
- Fig. 12: eine Aufsicht auf eine Pritsche des in Fig. 11 gezeigten Lastfahrzeugs,
- Fig. 13: eine Ansicht auf die in Fig. 10 mit XIII bezeichnete Querschnittsebene, wobei das die Silentbuchse aufweisende Schwenklager besonders gut erkennbar ist, und wobei der Fahrzeugrahmen in unverwundener Neutrallager angeordnet ist,
- Fig. 14: eine Darstellung ähnlich Fig. 13, wobei jedoch das Fahrgestell verwunden ist,
- Fig. 15: einen vergrößerten Ausschnitt aus Fig. 13, welcher das Schwenklager zeigt,
- Fig. 16: eine Darstellung ähnlich Fig. 15, wobei jedoch das Fahrgestell verwunden ist,
- Fig. 17: einen Längsschnitt durch das in Fig. 15 gezeigte Schwenklager in einer durch die Schwenkachse und die Normale auf die Erstreckungsebene der Pritsche aufgespannten Ebene,
- Fig. 18: eine Darstellung ähnlich Fig. 8, wobei jedoch die Auflager Silentbuchsen aufweisen,

- Fig. 19: eine eine Ansicht auf die Außenseite des in Fig. 18 gezeigten Auflagers,
- Fig. 20: eine Ansicht auf die in Fig. 11 mit XX bezeichnete Querschnittsebene, wobei die Silentbuchse im Querschnitt dargestellt ist,
- Fig. 21: eine Darstellung ähnlich Fig. 3, wobei jedoch der an dem Schwenklager angeordnete Zuganker mittels elastomerer Federelemente vorgespannt ist,
- Fig. 22: eine Darstellung ähnlich Fig. 21, wobei jedoch das Fahrgestell verwunden ist,
- Fig. 23: einen vergrößerten Ausschnitt aus Fig. 21, welcher das Schwenklager zeigt,

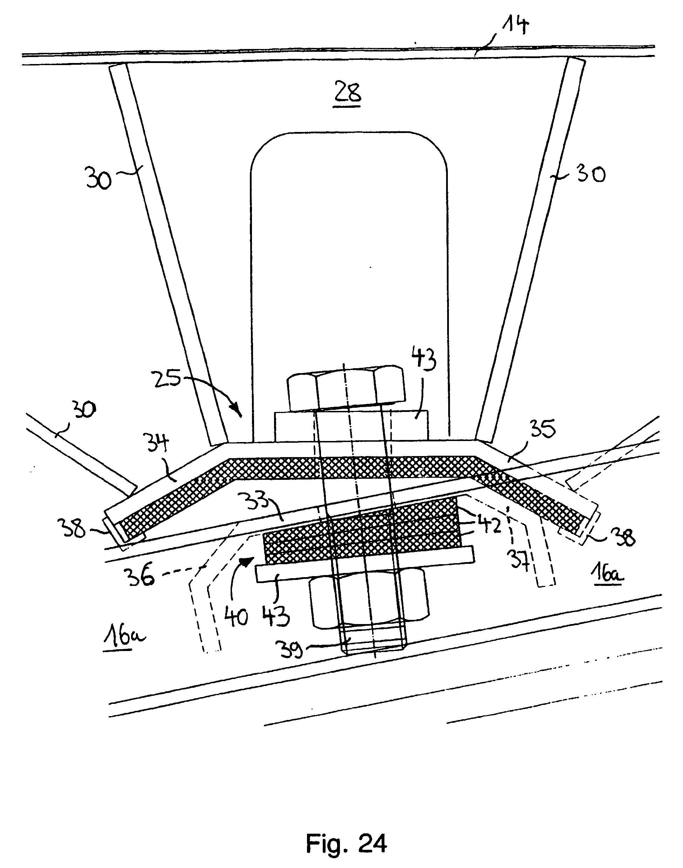

- Fig. 24: eine Darstellung ähnlich Fig. 23, wobei jedoch das Fahrgestell verwunden ist,

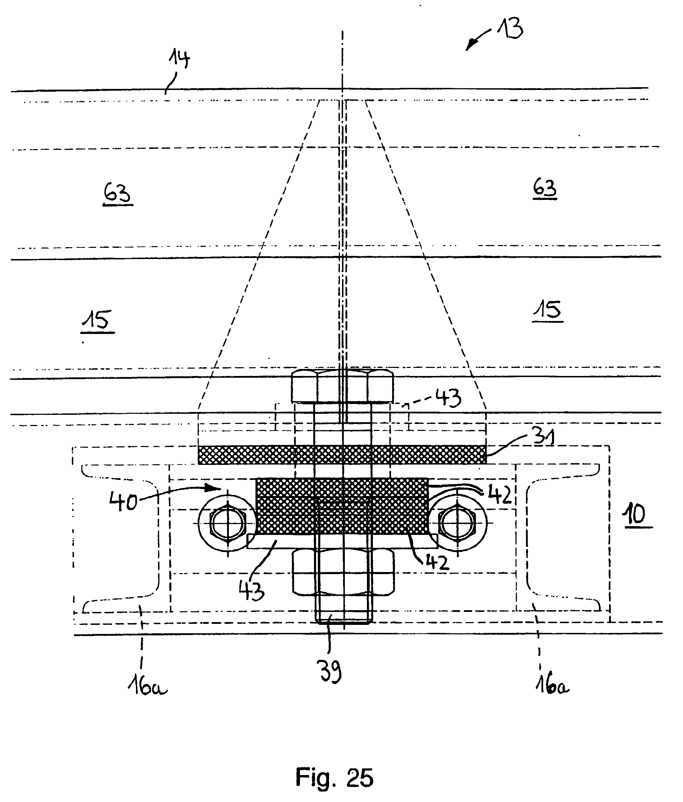

- Fig. 25: eine Ansicht auf die Außenseite des in Fig. 21 gezeigten Schwenklagers,
- Fig. 26: eine Darstellung ähnlich Fig. 8, wobei jedoch die an den Auflagern angeordneten Zuganker mittels elastomerer Federelemente vorgespannt sind,
- Fig. 27: eine Ansicht auf die Außenseite des Auflagers nach Fig. 26,
- Fig. 28: einen vergrößerten Ausschnitt aus Fig. 26, welcher ein Auflager zeigt,

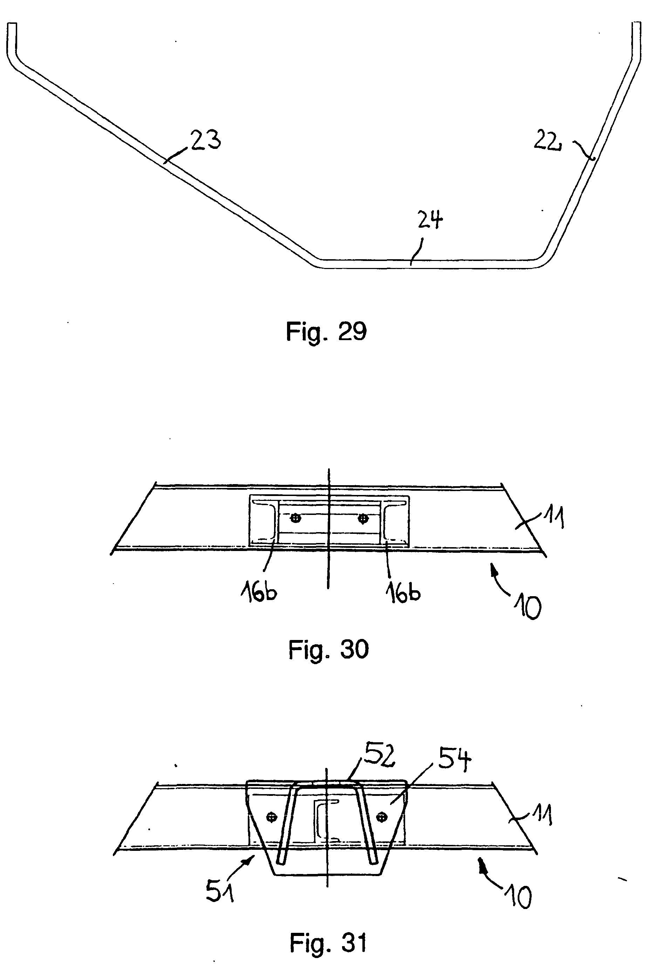

- Fig. 29: eine Ansicht auf die Stirnseite eines Katenprofilteils,
- Fig. 30 und 31: Teilseitenansichten des Hilfsrahmens im Bereich eines Auflagers, wobei der Aufbau von dem Hilfsrahmen getrennt ist,
- Fig. 32: eine Seitenansicht eines Lastfahrzeugs mit einem verwindungsweichen Fahrgestellrahmen, auf dem über einen Zwischenrahmen ein mit einem Kofferaufbau verbindbarer Aufbau angeordnet ist,
- Fig. 33: eine Aufsicht auf den Aufbau gemäß Fig. 32 und
- Fig. 34: eine Teilansicht auf die in Fig. 33 mit XXXIV bezeichnete Querschnittsebene des Lastfahrzeugs.

Ein im ganzen mit 1 bezeichnetes Lastfahrzeug hat einen biegesteifen, verwindungsweichen Fahrgestellrahmens 2, der zwei beidseits er Fahrzeuglängsmittelachse in Fahrzeuglängsrichtung nebeneinander verlaufende C-Profile 3 aufweist, die an ihrem vorderen und hinteren Endbereich jeweils durch Querprofile 4 miteinander verbunden sind. Der Fahrgestellrahmen 2 ist in an sich bekannter Weise über Fahrwerksfedern 5 und Stoßdämpfer 6 mit den die Räder 7 aufweisenden Achsen 8 des Lastfahrzeugs 1 verbunden. Des weiteren sind Stabilisatoren 9 vorgesehen, die an den Endbereichen der Achsen bzw. den Radnaben und am Fahrgestellrahmen 2 angelenkt sind.

Auf dem Fahrgestellrahmen 2 ist ein verwindungsweicher Hilfsrahmen 10 angeordnet, der auf dem Fahrgestellrahmen 2 aufliegt und diesem verschraubt oder vernietet ist. Der Hilfsrahmen 10 weist 2 auf den C-Profilen 3 des Fahrgestellrahmens 2 angeordnete, in Fahrzeuglängsrichtung verlaufende Längsprofilteile 11 auf, die an ihrem vorderen und hinteren Endbereich jeweils durch Querprofilteile 12 miteinander verbunden sind.

Über dem Hilfsrahmen 10 ist ein als Pritsche ausgebildeter biege- und verwindungssteifer Aufbau 13 angeordnet, der an seiner Oberseite eine Bodenplatte 14 mit einer Ladefläche aufweist. Zur Verbesserung seiner Torsionssteifigkeit weist der Aufbau 13 zwei sich in Fahrzeuglängsrichtung erstreckende kastenförmige Hohlprofile 15 auf, die seitlich voneinander beabstandet sind und über die Bodenplatte 14 und Quertraversen 16a, 16b miteinander verbunden sind, beispielsweise durch Schweißstellen.

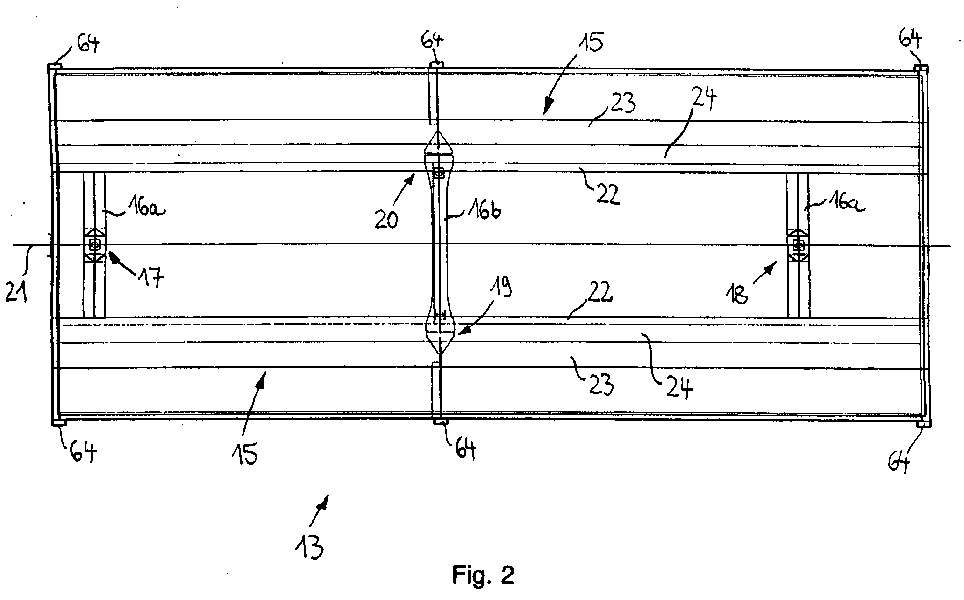

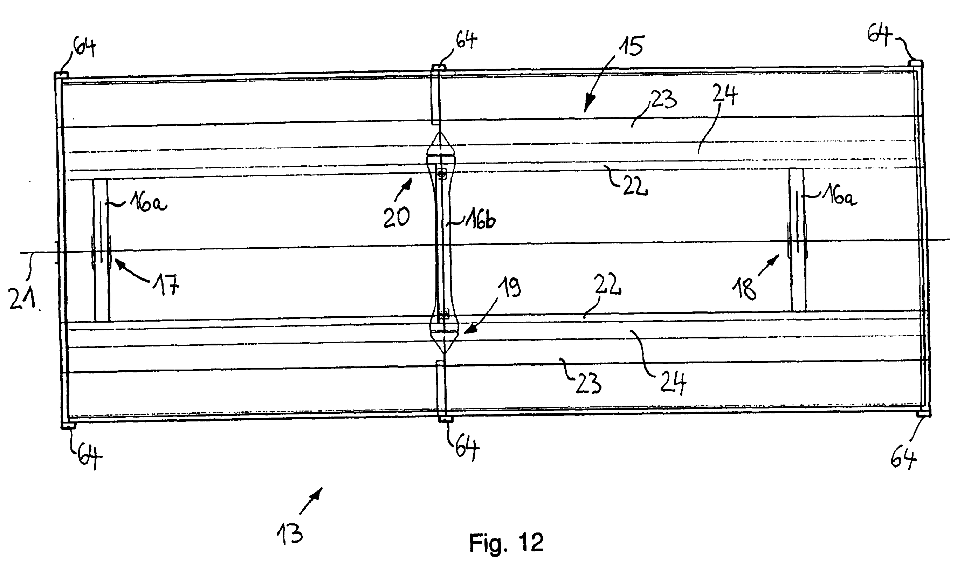

Der Aufbau 13 ist an vier Punkten über Bewegungslager mit dem Hilfsrahmen 10 verbunden, von denen zwei als Schwenklager 17, 18 und die beiden anderen als Auflager 19, 20 ausgebildet sind. Ein erstes Schwenklager 17 ist am vorderen Endbereich des Aufbaus 13 und ein zweites Schwenklager 18 am hinteren Endbereich des Aufbaus 13 angeordnet. Die Schwenkachsen dieser Schwenklager 17, 18 fluchten zueinander und sind jeweils in der Fahrzeuglängsmittelachse angeordnet. Die Auflager 19, 20 sind in Fahrzeuglängsrichtung zwischen den Schwenklagern 17, 18 vorgesehen. In den Fig. 2, 12 und 33 ist erkennbar, daß die Auflager 19, 20 beidseits der Längsmittelachse 21 des Lastfahrzeugs 1 angeordnet und von dieser seitlich beabstandet sind.

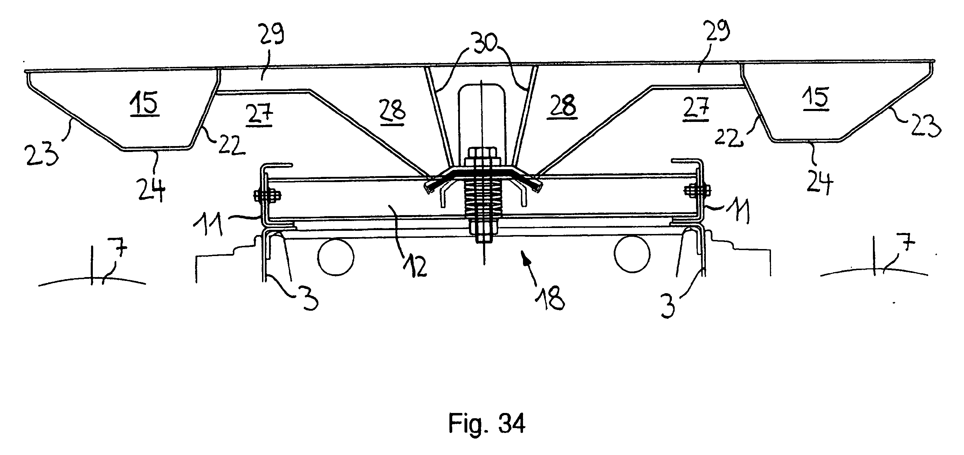

Vor allem in Fig. 2, 12 und 34 ist erkennbar, daß die Hohlprofile 15 in der Aufsicht auf den Aufbau 13 seitlich neben dem Hilfsrahmen 10 angeordnet sind und daß zwischen den Hohlprofilen 15 ein Bewegungsfreiraum gebildet ist, in den bei einer beim Verwinden von Fahrgestell- und Hilfsrahmen 10 zwischen diesem und dem Aufbau 13 auftretenden Relativbewegung Teilbereiche des Hilfsrahmens 10 in den Bewegungsfreiraum verschwenken können.

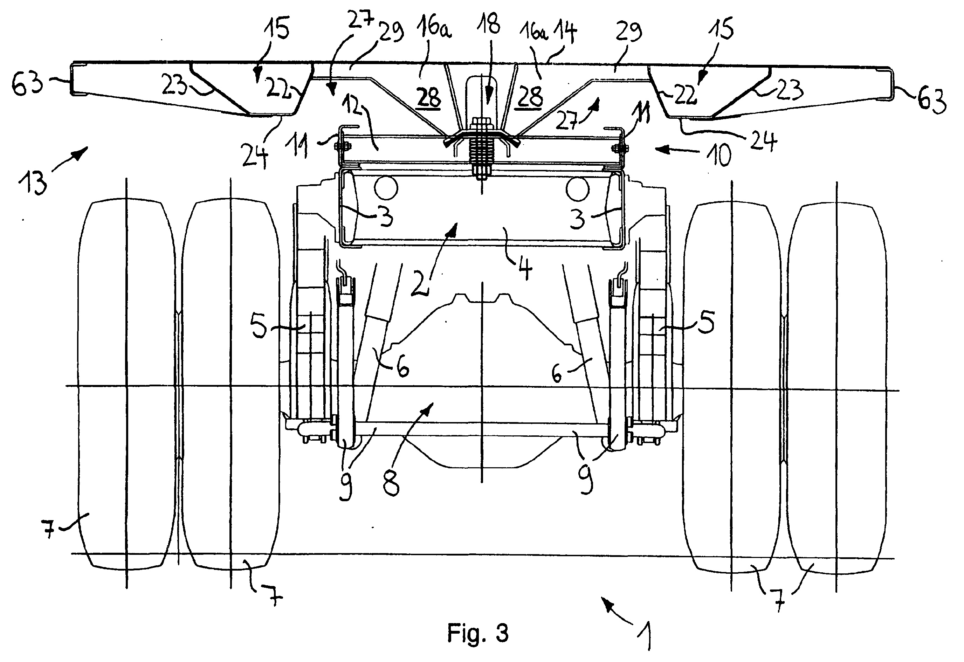

Die Hohlprofile 15 weisen jeweils ein an seiner Oberseite offenes Kastenprofilteil auf, das zwei Seitenwände 22, 23 und ein diese etwa U- oder trapezförmig miteinander verbindendes Bodenteil 24 hat. Wie in den Querschnittsdarstellungen in den Fig. 3, 13 und 35 erkennbar ist, ist das Bodenteil 24 etwa parallel zur Bodenplatte 14 des Aufbaus 13 angeordnet. Zwischen den Seitenwänden 22, 23 und dem Bodenteil 24 ist an der Innenseite des Kastenprofilteils jeweils ein stumpfer Winkel gebildet, daß heißt die fahrzeugaußenseitige Seitenwand 23 verläuft, ausgehend von dem Bodenteil 24 zum oberen Rand der Seitenwand 23, zur Fahrzeugaußenseite hin, und die der Fahrzeuglängsmittelachse 21 zugewandte Seitenwand 22 verläuft, ausgehend von dem Bodenteil 24 zum oberen Rand der Seitenwand 22, zur Fahrzeuginnenseite hin. Dadurch wird an der fahrzeugaußenseitigen Seitenwand 23 ein Freiraum gebildet, in dem die oberen Enden der Räder 7 beim Verwinden des Fahrgestellrahmens 2 verschwenken können. In entsprechender Weise ergibt sich an der fahrzeuginnenseitigen Seitenwand 22 ein Freiraum, in dem Teilbereiche des Hilfsrahmens 10 verschwenken können. Ingesamt ergibt sich dadurch ein niedriger Aufbau 13 und ein tiefer Schwerpunkt des Lastfahrzeug, was eine gute Geländegängigkeit des Lastfahrzeugs ermöglicht.

Die Kastenprofilteile können als Biegeblech auf einfache Weise hergestellt werden. Der obere Randbereich der Seitenwände 22, 23 kann gegebenenfalls zur Innenseite des Kastenprofilteils hin abgewinkelt sein, so daß dieser Randbereich etwa rechtwinklig zur Bodenplatte 14 des Aufbaus 13 angeordnet ist. An diesem oberen Randbereichen sind die Kastenprofilteile mit der Bodenplatte 14 verschweißt, so daß diese das Kastenprofilteil zu einem in Umfangsrichtung geschlossenen Hohlprofil 15 ergänzt. Dadurch ergibt sich trotz einer großen Biege- und Torsionssteifigkeit des Aufbaus 13 ein geringes Gewicht des Aufbaus 13.

In der Aufsicht auf den Aufbau 13 in den Fig. 2, 12 und 33 ist erkennbar, daß die Kastenprofile 15 miteinander verbindenden Quertraversen 16a, 16b am vorderen und hinteren Schwenklager 17, 18 und an den Auflagern 19, 20 angeordnet sind. An ihren stirnseitigen Enden sind die Quertraversen 16a, 16b jeweils mit der inneren Seitenwand 22 des benachbarten Hohlprofils 15 verschweißt. Zusätzlich sind die Quertraversen 16a, 16b über Schweißstellen mit der Unterseite der Bodenplatte 14 verbunden.

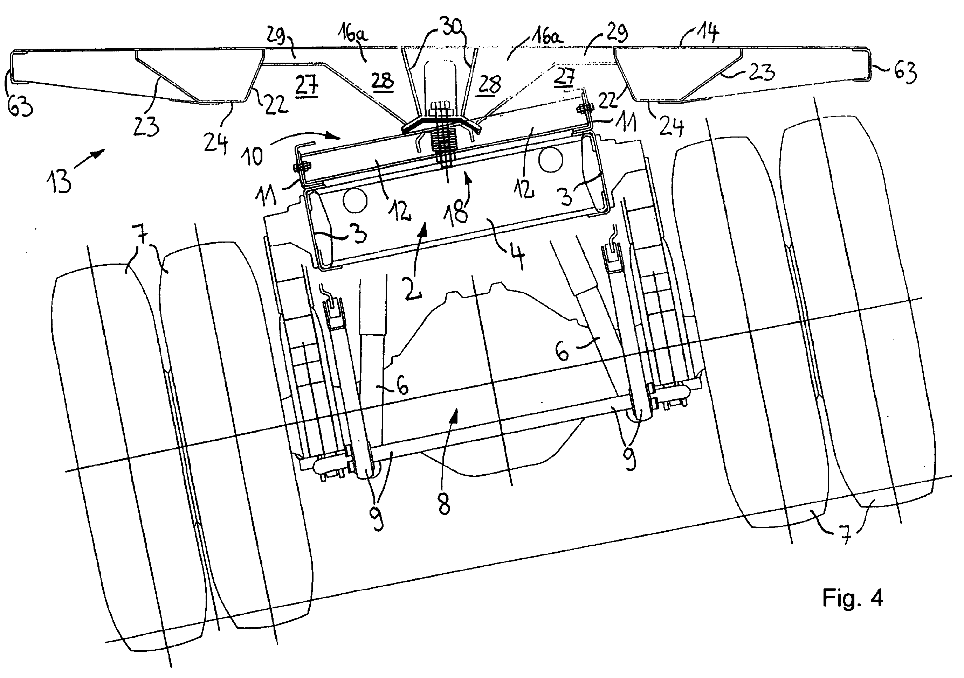

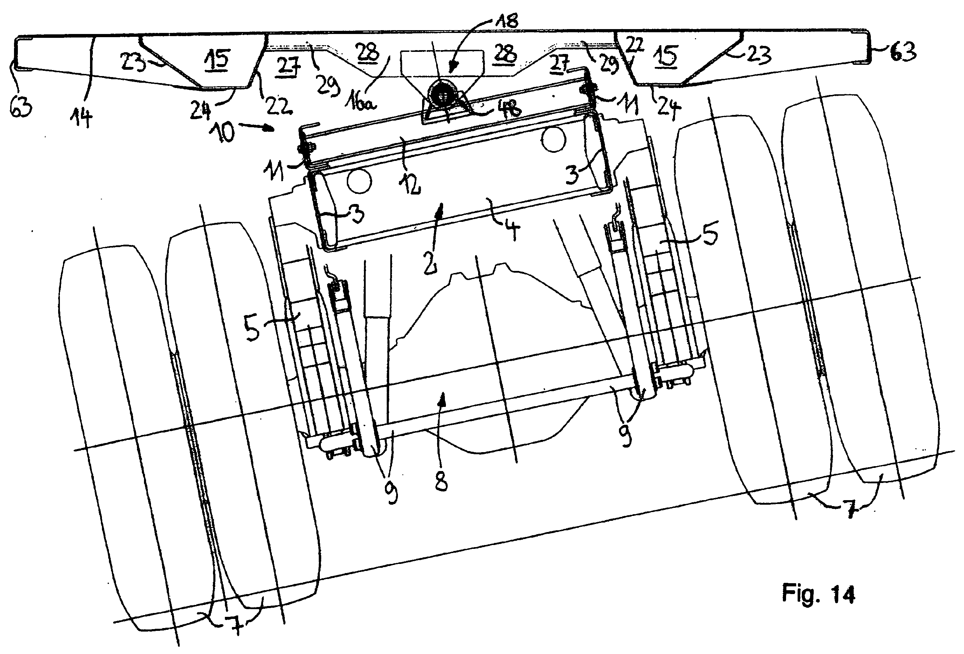

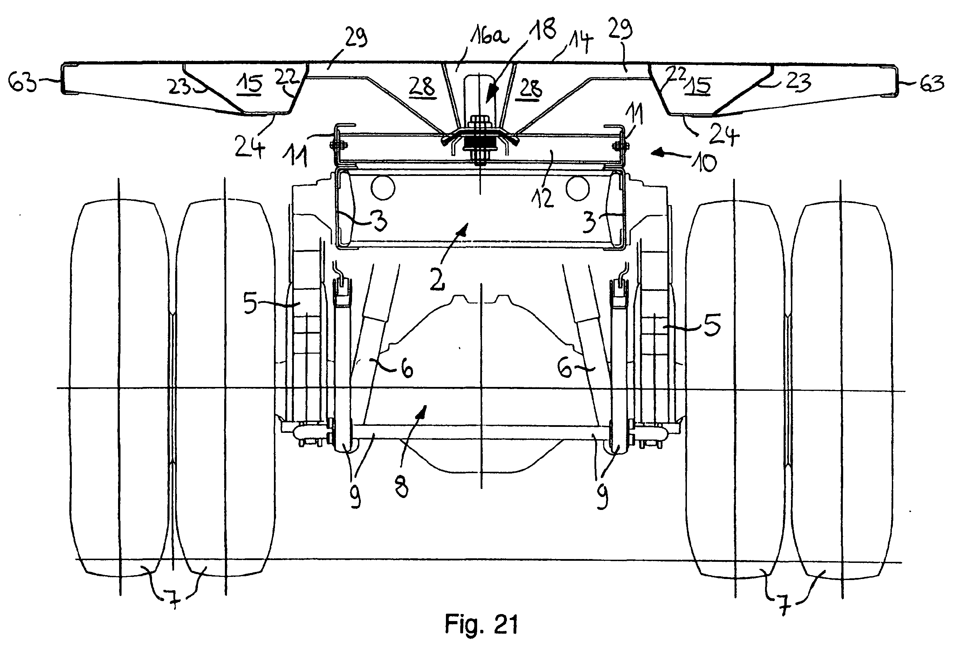

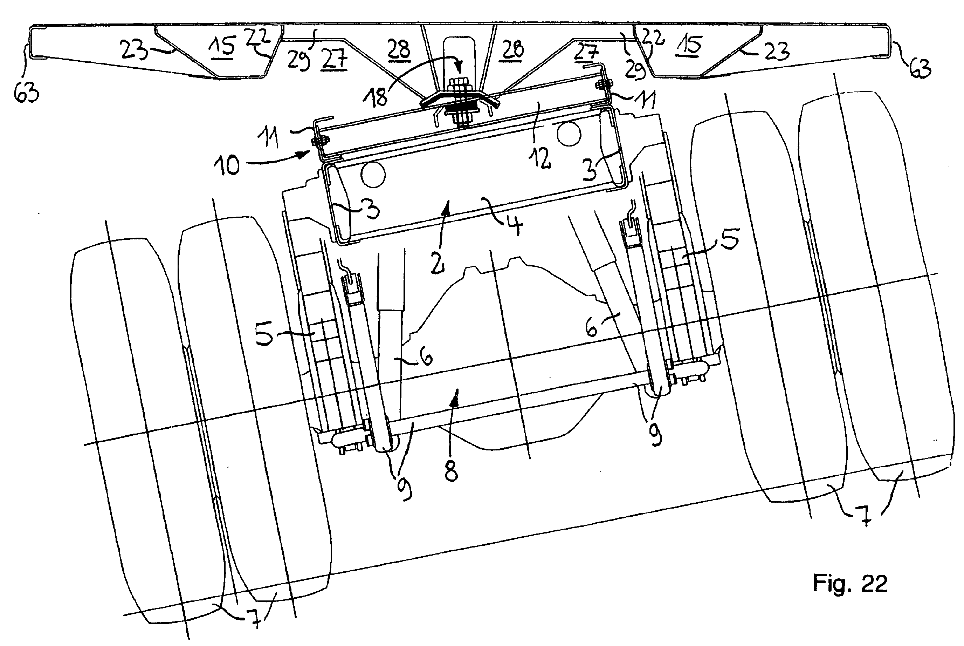

Wie in den Fig. 3, 13 und 21 besonders gut erkennbar ist, weisen die Schwenklager 17, 18 jeweils ein mit der benachbarten Quertraverse 16a verbundenes Lageroberteil 25 und ein mit dem Querprofilteil 12 des Hilfsrahmens 10 verbundenes, relativ zu dem Lageroberteil 25 verschwenkbares Lagerunterteil 26 auf. Die an den Schwenklagern 17, 18 angeordneten Quertraversen weisen an ihren mit den Hohlprofilen 15 verbunden Endbereichen unterseitig Aussparungen 27 auf, die seitlich beidseits der Schwenklager 17, 18 oberhalb der Längsprofile 11 des Hilfsrahmens 10 angeordnet sind. In diesen Aussparungen 27 ist der jeweils darunter befindliche Eck- oder Randbereich des Hilfsrahmens beim Verwinden von Fahrgestell- und Hilfsrahmen verschwenkbar (Fig. 4, 14 und 22).

In den Fig. 3, 13 und 21 ist weiter erkennbar, daß die an den Schwenklagern 17, 18 angeordneten Quertraversen 16a einen in Längsrichtung der Quertraversen 16a mittig angeordneten Basisbereich 28 aufweisen, der mit dem Lageroberteil 25 verbunden ist. Der Basisbereich ist etwa trapezförmig ausgebildet und weist einen oberen, mit der Bodenplatte 14 verschweißen Rand und einen dazu etwa parallel verlaufenden unteren Rand auf. Die beiden seitlichen Ränder des Basisbereichs 28 verlaufen, ausgehend vom oberen zum unteren Rand des Basisbereichs 28, schräg aufeinander zu.

Die Basisbereiche 28 sind am oberen Endbereich ihrer den Hohlprofilen 15 zugewandten Seitenränder einstückig mit Fortsätzen 29 verbunden, die in gerader Verlängerung der Erstreckungsebene des Basisbereichs an der Unterseite der Bodenplatte 14 verlaufen. An ihrem dem Basisbereich 28 abgewandten Ende sind diese Fortsätze 29 mit der benachbarten Seitenwand 22 des Hohlprofils 15 verschweißt. Zur Verstärkung können die Quertraversen 16a, 16b Rippen 30, Stege oder dergleichen Aussteifungen aufweisen, die mit ihrer Erstreckungsebene quer zur Erstreckungsebene der Quertraversen 16a, 16b angeordnet sind.

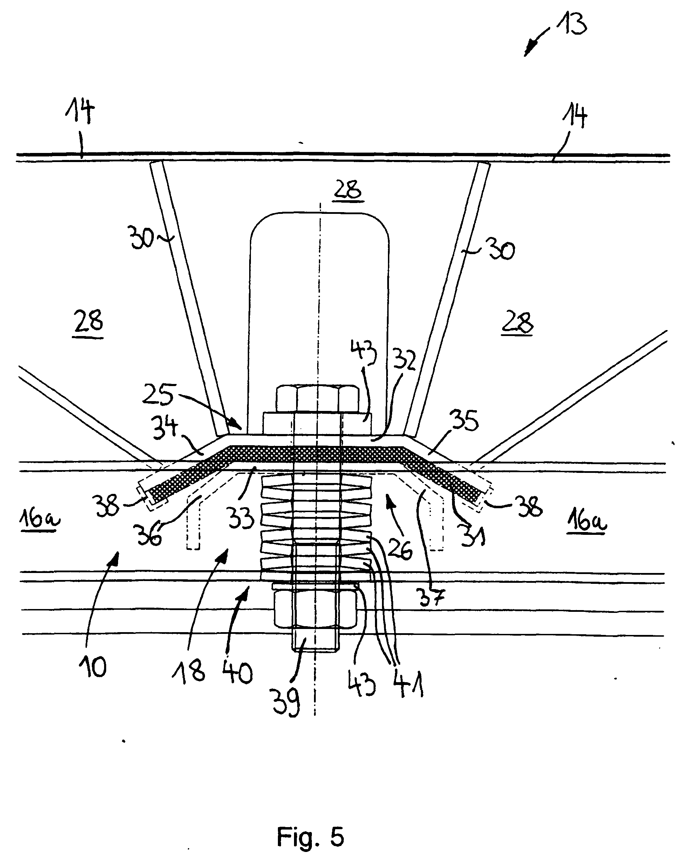

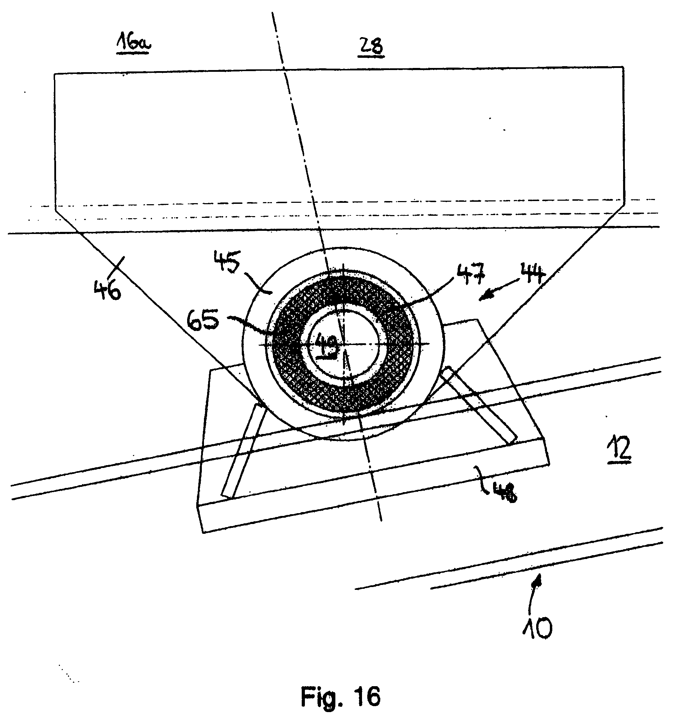

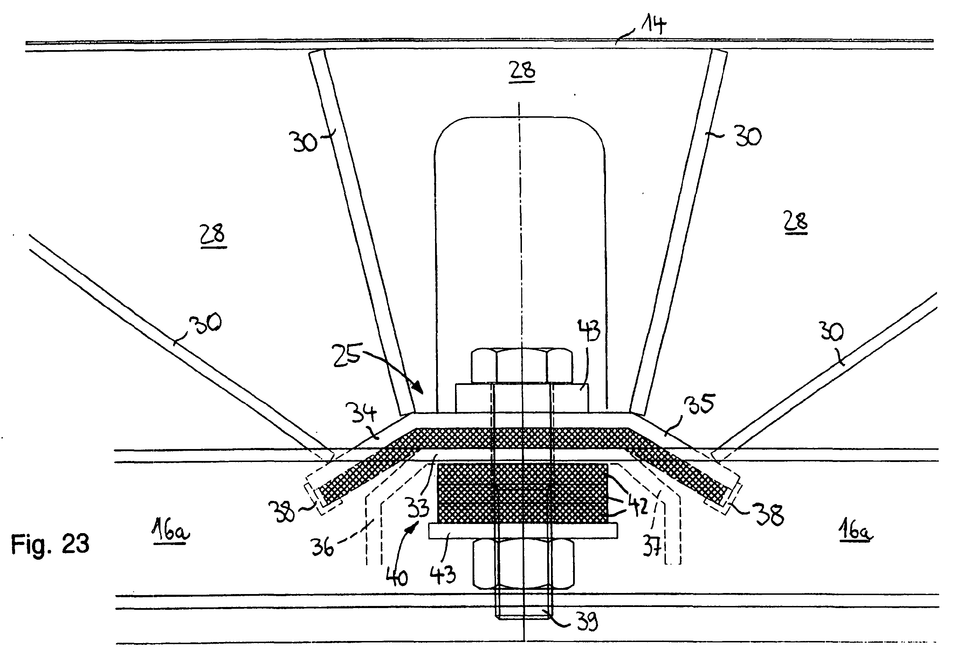

Bei dem Ausführungsbeispielen nach Fig. 5 und 16 ist zwischen dem Lageroberteil 25 und dem Lagerunterteil 26 eine elastomere Zwischenlage 31 angeordnet, die beispielsweise aus Gummi bestehen kann. Das Lageroberteil 25 und das Lagerunterteil 26 weisen jeweils einen etwa parallel zur Bodenplatte verlaufenden plattenförmigen Lagerabschnitt 32, 33 auf, an den sich in Schwenkrichtung der Schwenklager 17, 18 seitlich beidseits jeweils nach unten abgewinkelte plattenförmige Seitenflansche 34, 35, 36, 37 anschließen. In den Fig. 5 und 23 ist erkennbar, daß die Zwischenlagen 31 an der Unterseite des Lagerabschnitts 32 und der Seitenflansche 34, 35 angeordnet ist und an ihren Seitenrändern in taschenförmige Halterungen eingesetzt ist. Diese Halterungen sind durch die dem Lagerabschnitt 32 abgewandten Außenrandbereiche der Seitenflansche 34, 35 und damit verbundene, winkelförmige Seitenbegrenzungsanschlägen 38 gebildet.

Bei in unverschwenkter Neutrallage befindlichen Schwenklagern 17, 18 sind die stirnseitigen Außenränder der Zwischenlage 31 jeweils durch einen Freiraum von der diesen jeweils zugewandten Wandung des Seitenbegrenzungsanschlags 38 beabstandet. In diesem Freiraum wird der elastomere Werkstoff der Zwischenlage 31 bei einer Relativverschwenkung von Lageroberteil 25 und Lagerunterteil 26 verdrängt.

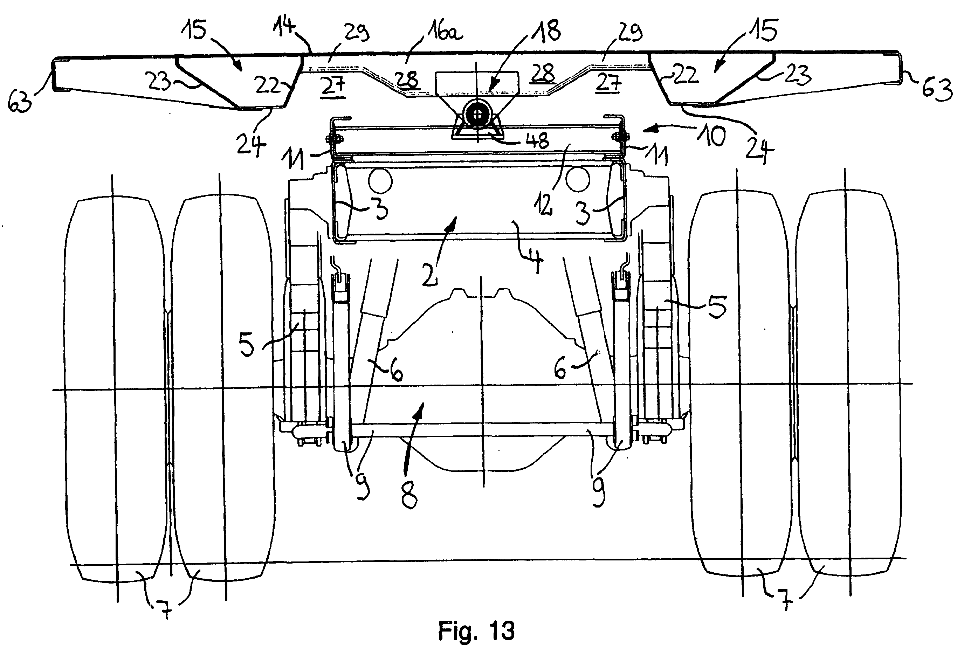

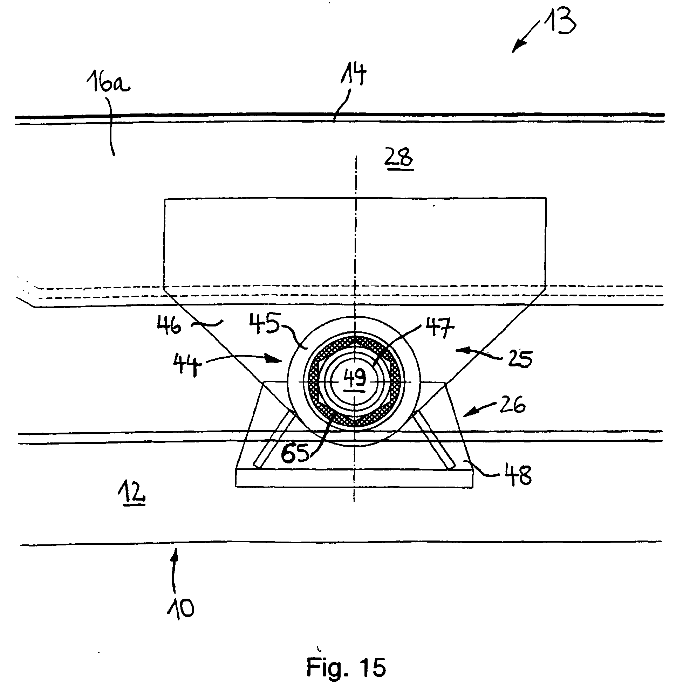

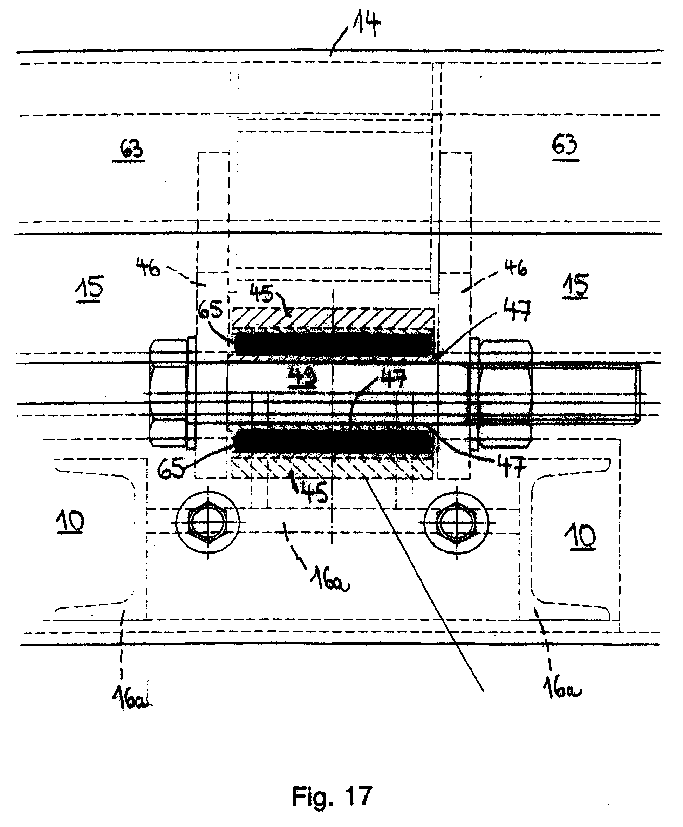

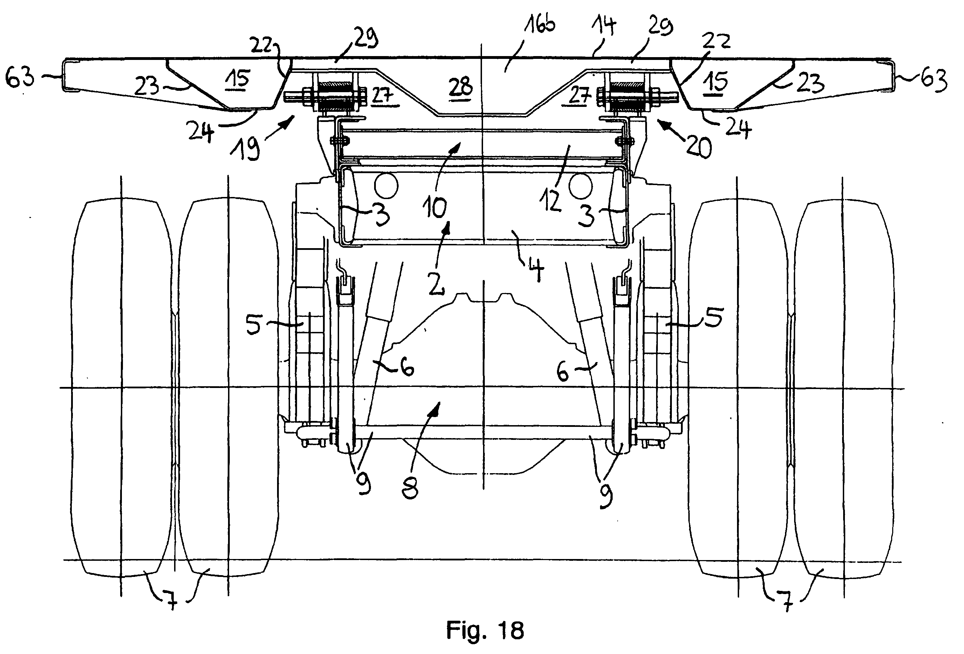

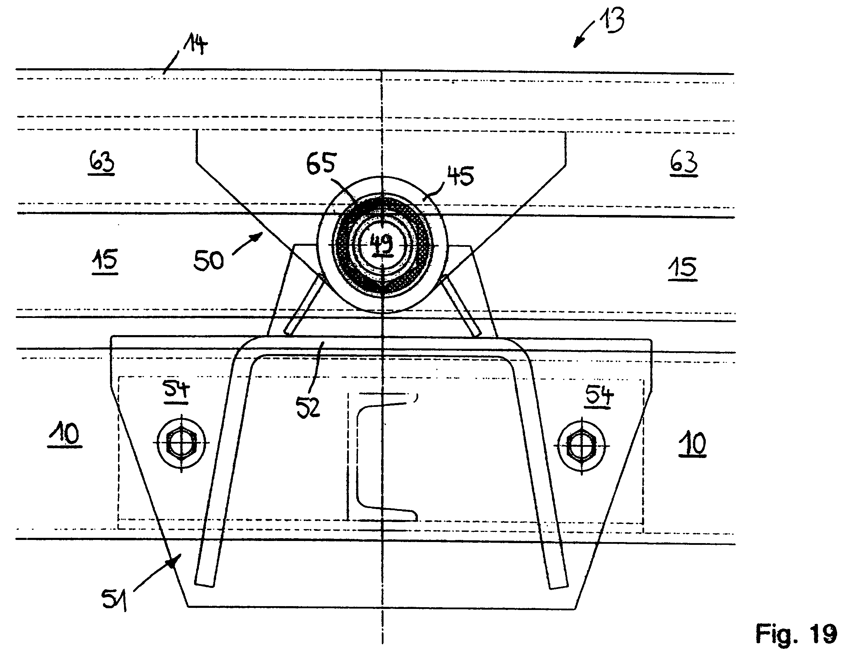

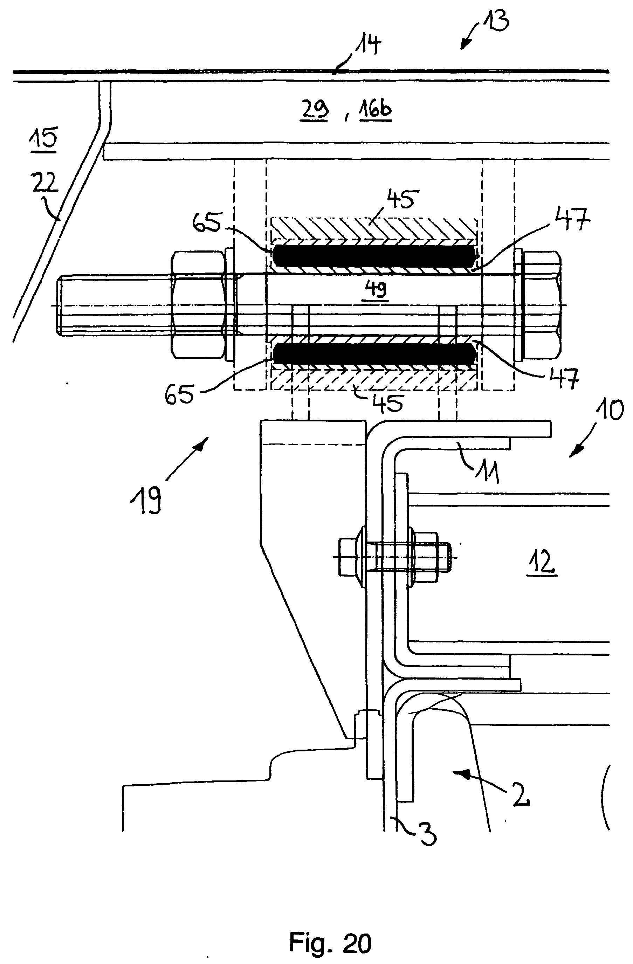

In den Fig. 5 und 23 ist deutlich erkennbar, daß bei unverwundenem Fahrgestellrahmen 2 zwischen den Seitenflanschen 34 und 36 sowie zwischen den Seitenflanschen 35 und 37 jeweils ein Keilspalt gebildet ist, der sich ausgehend von dem plattenförmigen Lagerabschnitten 32, 33 zur Fahrzeuglängsaußenseite hin erweitert. An ihren dem plattenförmigen Lagerabschnitt 33 abgewandten Außenrändern sind die Seitenflansche 36, 3.7. mit nach unten abgewinkelten Stützen verbunden, die an dem Hilfsrahmen 10 befestigt sind. Das Lageroberteil 25 und das Lagerunterteil 26 sind von einem als Schraube ausgebildeten Zuganker 39 durchsetzt, der durch die Vorspannkraft einer Feder 40 auf Zug belastet ist. Bei dem Ausführungsbeispiel nach Fig. 5 ist die Feder 40 durch Tellerfederelemente 41 und bei dem Ausführungsbeispiel nach Fig. 23 durch elastomere Federelemente 42 gebildet, die übereinander gestapelt sind. Die Tellerfederelemente 41 und die elastomeren Federelemente 42 weisen jeweils eine Lochung auf, die der Zuganker 39 durchsetzt. In den Fig. 5 und 23 ist erkennbar, daß das Lageroberteil 25, die Zwischenlage 31, das Lagerunterteil 26 und die Feder 40 zwischen dem Schraubenkopf und der Mutter des Zugankers 39 eingespannt ist. An dem Schraubenkopf und der Mutter sind Zwischenscheiben 43 unterlegt.
Bei dem Ausführungsbeispiel nach Fig. 13 bis 17 weisen die Schwenklager 17, 18 und bei dem Ausführungsbeispiel nach Fig. 18 bis 20 die Auflager 19, 20 jeweils eine Hülsenfeder 44 auf. Die Achse der Hülsenfeder 44 ist bei den Schwenklagern 17, 18 etwa in der Fahrzeuglängsmittelachse 21 und bei den Auflagern 19, 20 quer dazu, vorzugsweise etwa rechtwinklig zur Fahrzeuglängsmittelachse 21 angeordnet. In Fig. 18 ist erkennbar, daß die Achsen der Hülsenfedern 44 der beiden Auflager in gerader Verlängerung zueinander angeordnet sind bzw. zueinander fluchten. Das Lageroberteil 25 hat eine Lagerhülse 45, die bei den Schwenklagern 17, 18 über Anschlußplatten 46 mit der benachbarten Quertraverse 16a und bei den Auflagern 19, 20 über Anschlußplatten 46 mit der Quertraverse 16b verbunden ist. Die Lagerhülse 45 kann mehrteilig aus einem Hülsenaußenteil und einem Hülseninnenteil aufgebaut sein (siehe Fig. 17 und 20). In den Figuren 17 und 20 ist erkennbar, daß die Anschlußplatten 46 beidseits der Quertraverse 16a, 16b und beidseits der Lagerhülse 45 angeordnet sind. Das Lagerunterteil 26 hat einen in die Innenhöhlung der Lagerhülse 45 eingreifenden Lagerzapfen 47, der über einen Lagerbock 48 mit dem Hilfsrahmen 10 verbunden ist. Der Lagerzapfen 47 ist als Hohlzapfen ausgebildet, der auf dem Schaft einer Schraube 49 angeordnet ist, die in den Anschlußplatten 46 vorgesehene Lochungen durchsetzt. In den Figuren 17 und 20 ist erkennbar, daß die einander zugewandten Innenseiten der Anschlußplatten 46 an den Stirnseiten des Lagerzapfens 47 anliegen und daß die Lagerhülse 45 in axialer Richtung beidseits von den Anschlußplatten 46 beabstandet ist.

Der Lagerzapfen 47 ist mit seiner Längsmittelachse etwa in der Längsmittelachse der Lagerhülse 45 angeordnet und in radialer Richtung von der Lagerhülse 45 beabstandet. Der zwischen der Innenwand der Lagerhülse 45 und dem Lagerzapfen 47 gebildete Zwischenraum ist mit einem elastomeren Werkstoff 65 überbrückt, der beim Relativverschwenken von Lageroberteil 25 und Lagerunterteil 26 um die Längsmittelachse des Lagerzapfen 47 elastisch nachgibt. Erwähnt werden soll noch, daß auch eine umgekehrte Anordnung der Lagerteile denkbar ist, bei welcher die Lagerhülse 45 mit dem Hilfsrahmen 10 und der Lagerzapfen 47 mit dem Aufbau 13 verbunden ist.

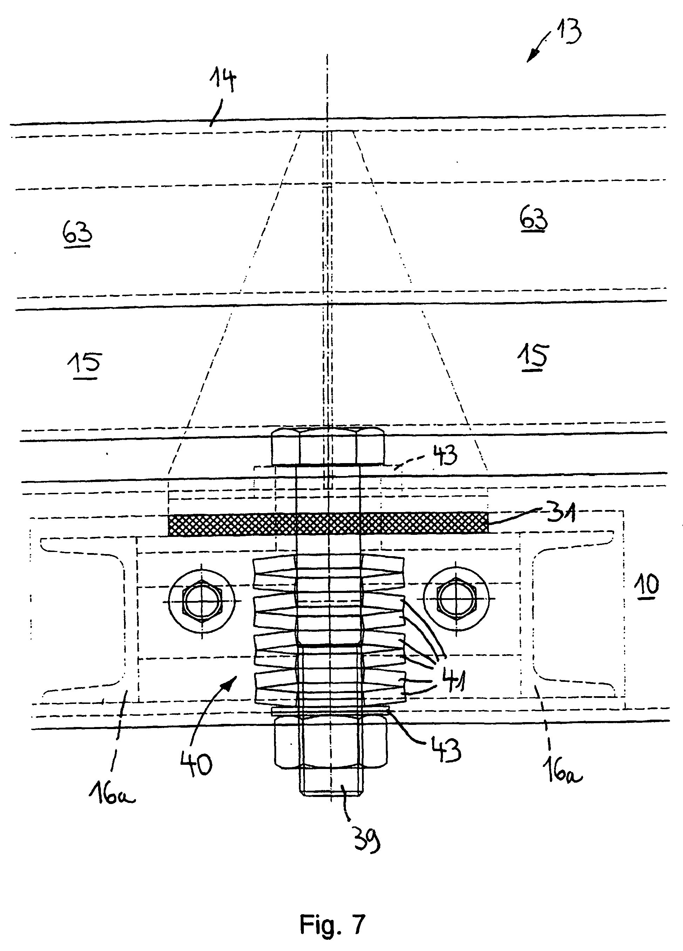

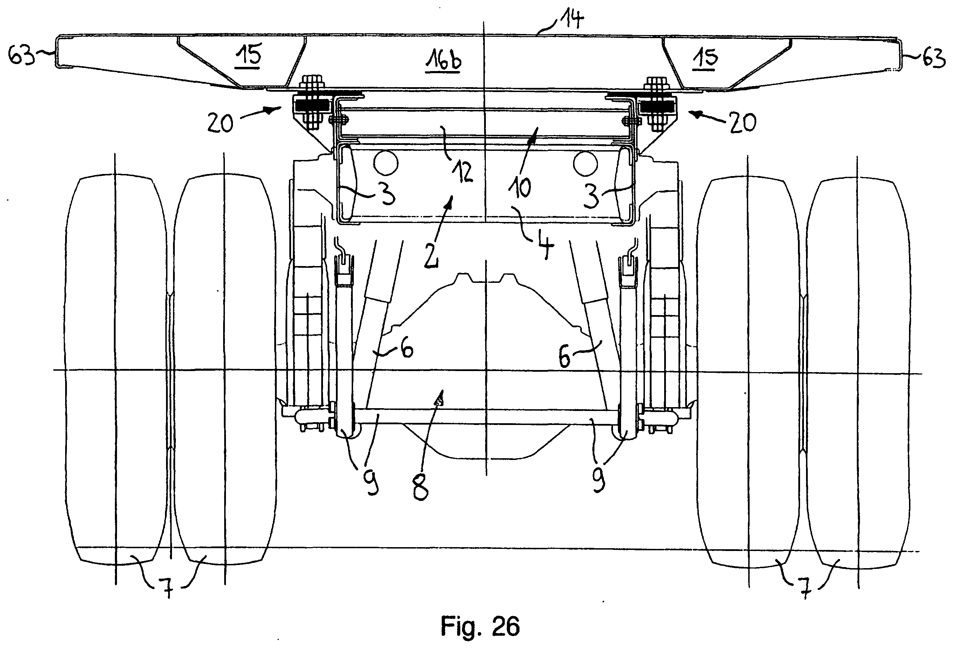

Die Auflager 19, 20 sind jeweils an einer Quertraverse 16b angeordnet, welche die Hohlprofile 15 miteinander verbindet. Der obere Rand der Quertraverse 16b ist mit der Unterseite der Bodenplatte 14 und die Enden der Quertraverse 16b sind mit den inneren Seitenwänden 22 und den Bodenteilen 24 der Hohlprofile 15 verschweißt. Bei den Ausführungsbeispielen gemäß Fig. 7 und 26 weist die Quertraverse 16b in dem zwischen den Hohlprofilen 15 befindlichen Teilbereich über ihre Länge einen etwa konstante Querschnittsabmessungen auf. Bei dem Ausführungsbeispiel nach Fig. 18 weist die Quertraverse 16b an ihren mit den Hohlprofilen 15 verbunden Endbereichen unterseitig Aussparungen 27 auf, in denen die Auflager 19, 20 angeordnet sind.

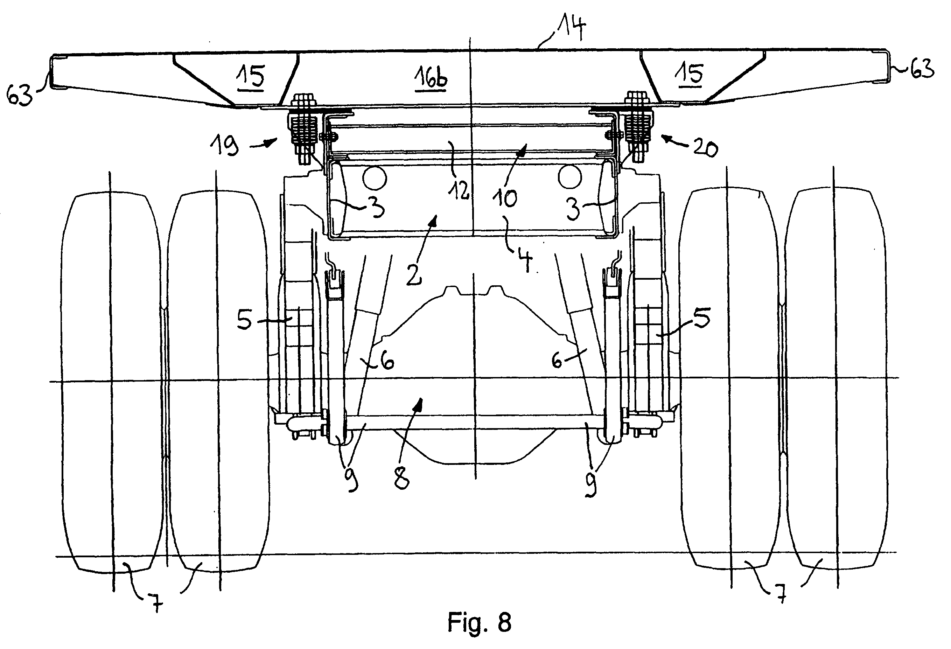

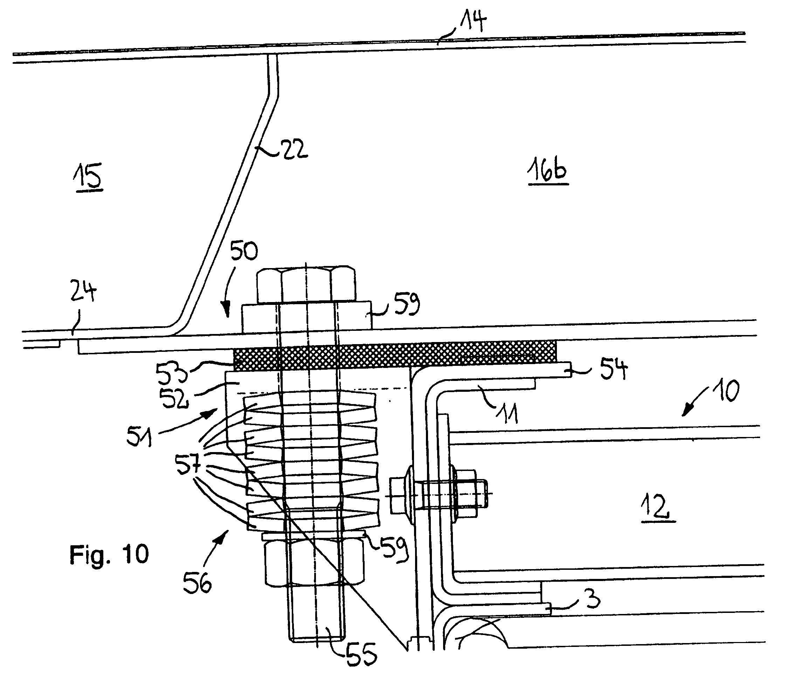

Bei den Ausführungsbeispielen gemäß den Figuren 8 bis 10 und 26 bis 28 weisen die Auflager 19, 20 jeweils ein durch einen unterseitigen Teilbereich der Quertraverse 16b gebildetes Lageroberteil 50 und ein relativ dazu etwa parallel zur Erstreckungsebene der Bodenplatte 14 bewegbares Lagerunterteil 51 auf. Das Lagerunterteil 51 hat ein etwa U-förmiges Lagerelement, daß mit seinen U-Schenkeln nach unten weißt und auf dessen U-Quersteg 52 eine elastomere Zwischenlage 53 angeordnet ist, auf der das Lageroberteil 50 aufliegt. Das U-förmige Lagerelement ist mit dem unteren Schenkel eines winkelförmigen Halteteils 54 verbunden, das über Schrauben, Nieten oder dergleichen Verbindungselemente an dem Hilfsrahmen 10 befestigt ist. In Fig. 10 ist erkennbar, daß der obere Schenkel des winkelförmigen Halteteils 54 auf dem Hilfsrahmen 10 aufliegt und daß dieser Schenkel den U-Quersteg 52 in gerader Verlängerung fortsetzt. Dabei erstrecken sich die elastomere Zwischenlage 53 und das Lageroberteil 50 bis über den auf dem Hilfsrahmen 10 aufliegenden Schenkel des Halteteils 54.

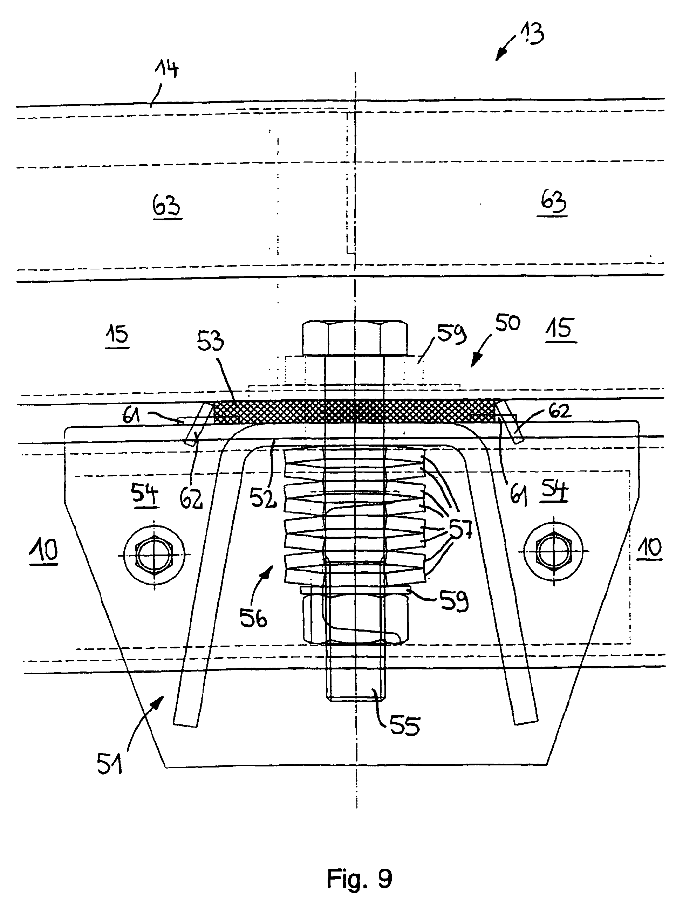

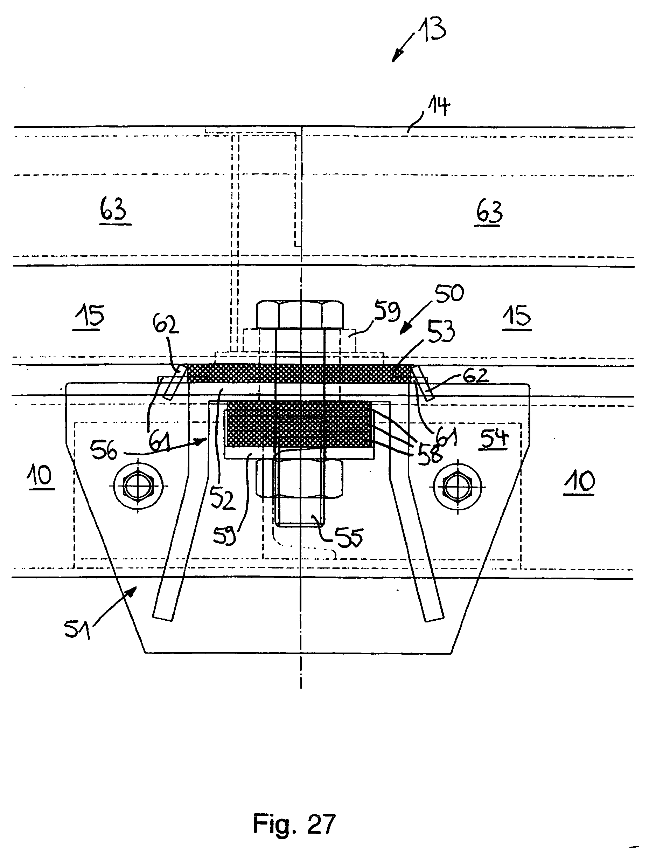

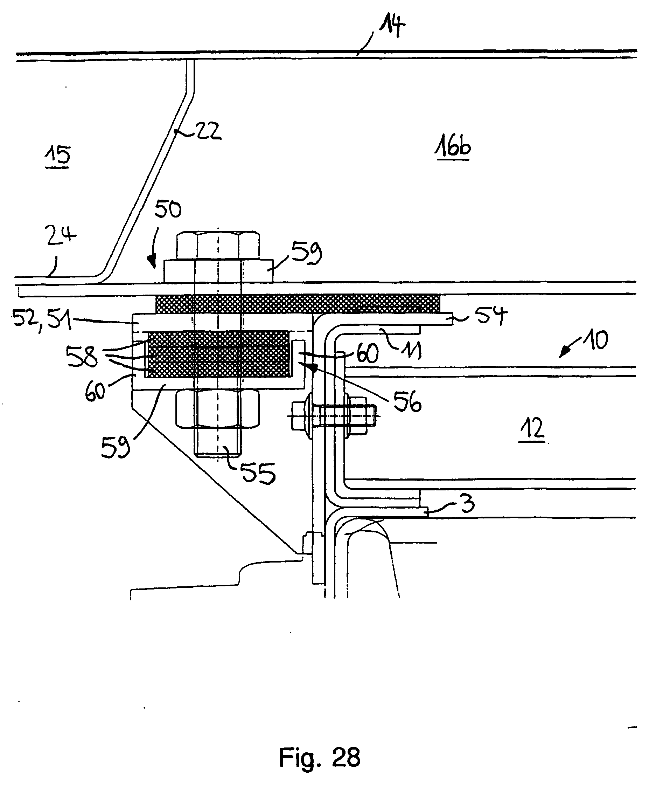

Das Lageroberteil 50 und das Lagerunterteil 51 sind von einem durch eine Schraube gebildeten Zuganker 55 durchsetzt, der durch die Vorspannkraft einer Feder 56 auf Zug belastet ist und den Aufbau 13 auf den Hilfsrahmen 10 niederspannt. Bei dem Ausführungsbeispiel nach Fig. 9 ist die Feder 56 durch Tellerfederelemente 57 und bei dem Ausführungsbeispiel nach Fig. 27 durch elastomere Federelemente 58 gebildet, die zu einem Federstapel übereinander geschichtet sind. Die Tellerfederelemente 57 und die elastormeren Federelemente 58 weisen jeweils eine Lochung auf, die der Zuganker 55 durchsetzt. In den Figuren 9 und 27 ist erkennbar, daß die das Lageroberteil 50, die Zwischenlage 53, den U-Quersteg 52 des Lagerunterteils 51 und die Feder 56 zwischen dem Schraubenkopf und der Mutter des Zugankers 55 eingespannt ist. An dem Schraubenkopf und der Mutter sind Zwischenscheiben 59 unterlegt. Bei dem Ausführungsbeispiel nach Figur 28 sind an der dem Hilfsrahmen 10 zugewandten Seite der elastomeren Federelemente 58 und an der gegenüberliegenden Außenseite der Federelemente 58 Seitenbegrenzungsanschläge 60 für die Federelemente 58 angeordnet. Die Seitenbegrenzungsanschläge 60 sind einstückig mit der zu der Feder 56 benachbarten Zwischenscheibe 59 ausgebildet und umgrenzen zusammen mit dieser einen U-förmigen Aufnahmeraum für die Zwischenscheiben 59. Dieser Aufnahmeraum ist zur Fahrzeugvorder- und zur Fahrzeugrückseite hin seitlich offen, damit der elastische Werkstoff der Feder 56 bei einer Relativbewegung zwischen Hilfsrahmen 10 und Aufbau 13 nach vorne und/oder hinten verdrängt werden kann.
Auch an einander gegenüberliegenden Seitenrandbereichen der elastomeren Zwischenlage 53 sind Seitenbegrenzungsanschläge 61, 62 angeordnet, wobei die Seitenbegrenzungsanschläge 61 mit den Hilfsrahmen und die quer dazu angeordneten Seitenbegrenzungsanschläge 62 mit dem Aufbau 13 verbunden sind.

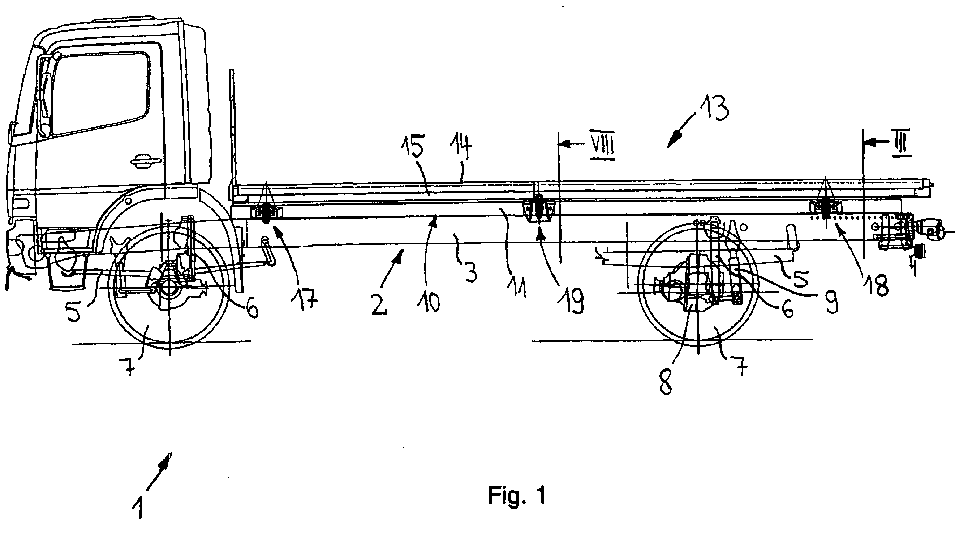

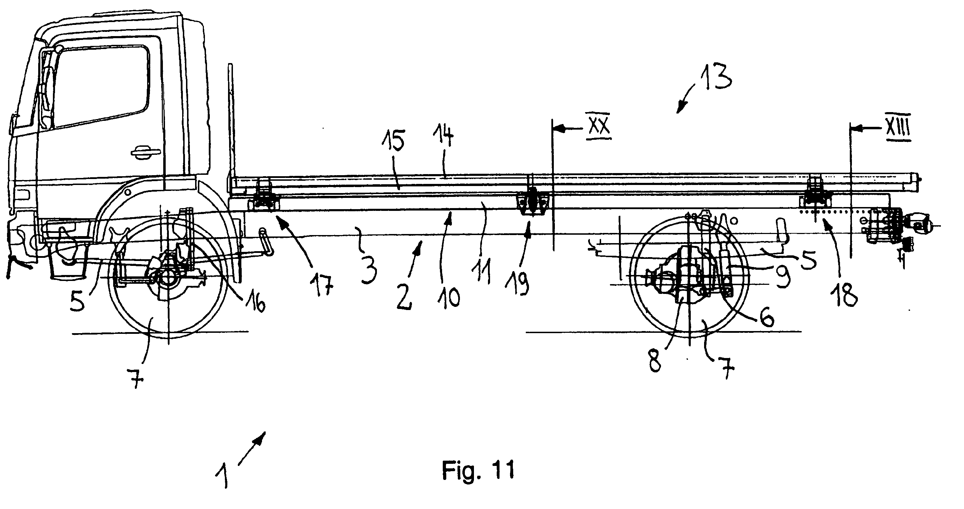

In den Fig. 1, 2, 11 und 12 ist noch erkennbar, daß am äußeren Rand des Aufbaus 13 ein Außenrahmen 63 angeordnet ist, der den seitlichen Rand des Aufbaus bildet. Auf diesem Außenrahmen 63 liegt die Bodenplatte 14 auf. Die Bodenplatte 14 und.der Außenrahmen 63 sind vorzugsweise durch Schweißnähte miteinander verbunden. An dem Außenrahmen 63 sind Anschlußstellen 64 für Rungen und/oder für eine Ladebordwand angeordnet.

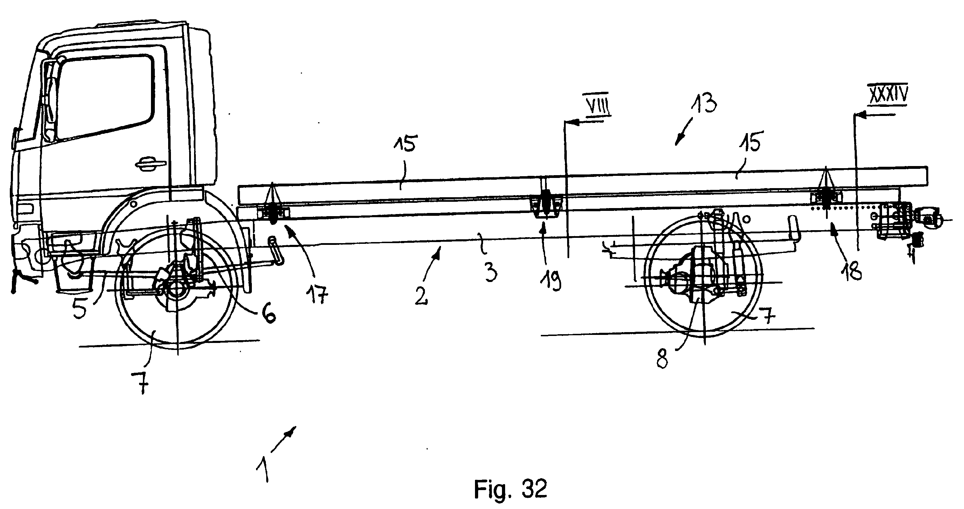

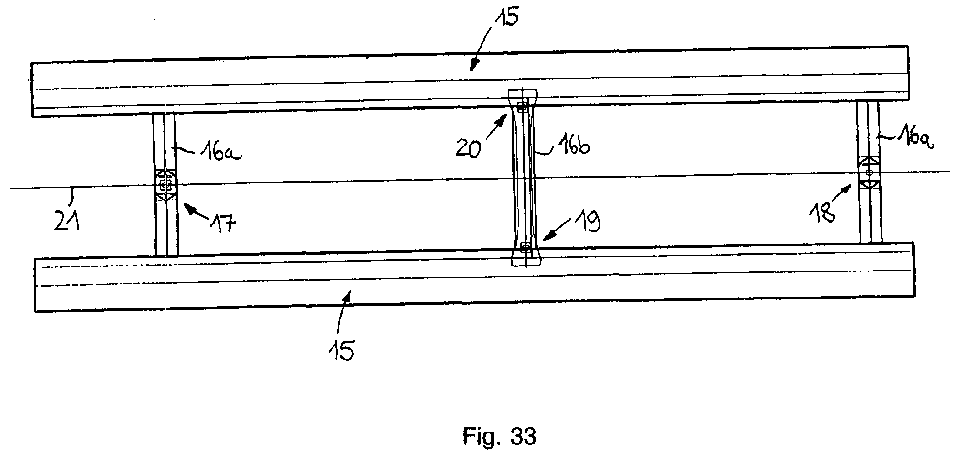

Bei den in den Figuren 32 bis 34 gezeigten Ausführungsbeispielen bilden die Hohlprofile 15 die Längsaußenränder des Aufbaus 13. Die Hohlprofile 15 bestehen jeweils aus einem an seiner Oberseite offenen Kastenprofilteil, das an seinen freien Längsrändern mit einer Bodenplatte 14 verbunden ist. Im Unterschied zu den übrigen Ausführungsbeispielen erstreckt sich die Bodenplatte dabei jedoch im wesentlichen nur über die Kastenprofilteile. In Figur 33 ist erkennbar, daß die beiden Hohlprofile 15 durch drei Quertraversen 16a, 16b miteinander verbunden sind. An der vorderen und der hinteren Quertraverse 16a ist jeweils ein Schwenklager 17, 18 und an der etwa mittig zwischen diesen Quertraversen 16a befindlichen Quertraverse 16b sind die Auflager 19, 20 angeordnet.

Das Lastfahrzeug 1 hat also einen biegesteifen, aber verwindungsweichen Fahrgestellrahmen 2, auf dem ein verwindbarer Hilfsrahmen 10 angeordnet ist, der einen biege- und verwindungssteifen Aufbau 13 trägt, der an wenigstens drei Punkten über Bewegungslager mit dem Hilfsrahmen 10 verbunden ist. Wenigstens eines dieser Bewegungslager ist als Schwenklager 17, 18 ausgebildet, dessen Schwenkachse etwa in der Fahrzeuglängsmittelachse 21 verläuft. Wenigstens zwei der Bewegungslager sind als Auflager ausgebildet, die seitlich beidseits der Schwenkachse angeordnet und in Fahrzeuglängsrichtung von dem Schwenklager 17, 18 beabstandet sind. Zur Verbesserung seiner Torsionssteifigkeit weist der Aufbau 13 wenigstens zwei sich in Fahrzeuglängsrichtung erstreckende rohrförmige Hohlprofile 15 auf, die seitlich voneinander beabstandet und zumindest über eine Bodenplatte 14 miteinander verbunden sind. Der zwischen den Hohlprofilen 14 gebildete Zwischenraum dient als Bewegungsfreiraum zur Aufnahme von Teilbereichen des Hilfsrahmens 10 bei der beim Verwinden von Fahrgestell- und Hilfsrahmen 2, 10 zwischen diesem und dem Aufbau 13 auftretenden Relativbewegung.

## Patentansprüche

1. Lastfahrzeug (1) mit einem biegesteifen, aber verwindungsweichen Fahrgestellrahmen (2), auf dem ein verwindbarer Hilfsrahmen (10) angeordnet ist, der einen biege- und verwindungssteifen, eine Bodenplatte (14) und/oder Quertraversen (16a, 16b) aufweisenden Aufbau (13) trägt, der zur Verbesserung seiner Torsionssteifigkeit ein sich in Fahrzeuglängsrichtung erstreckendes rohrförmiges Hohlprofil (15) aufweist, wobei der Aufbau (13) an wenigstens drei Punkten über Bewegungslager mit dem Hilfsrahmen (10) verbunden ist, wobei wenigstens eines dieser Bewegungslager als Schwenklager (17, 18) ausgebildet ist, dessen Schwenkachse etwa in der Fahrzeuglängsmittelachse (21) verläuft, und wobei wenigstens zwei der Bewegungslager als Auflager (19, 20) ausgebildet sind, die seitlich beidseits der Schwenkachse angeordnet und in Fahrzeuglängsrichtung von dem Schwenklager (17, 18) beabstandet sind, **dadurch gekennzeichnet, daß** der Aufbau (13) wenigstens zwei der sich in Fahrzeuglängsrichtung erstreckenden rohrförmigen Hohlprofile (15) aufweist, die seitlich voneinander beabstandet und über die Bodenplatte (14) und/oder die Quertraversen (16a, 16b) miteinander verbunden sind, und daß der zwischen diesen Hohlprofilen (15) gebildete Zwischenraum als Bewegungsfreiraum zur Aufnahme von Teilbereichen des Hilfsrahmens (10) bei der beim Verwinden von Fahrgestellrahmen (2) und Hilfsrahmen (10) zwischen diesem und dem Aufbau (13) auftretenden Relativbewegung ausgebildet ist.

2. Lastfahrzeug (1) nach Anspruch 1, **dadurch gekennzeichnet, daß** der Aufbau (13) an drei Punkten über Bewegungslager mit dem Hilfsrahmen (10) verbunden ist, daß das Schwenklager (17, 18) am vorderen oder hinteren Endbereich des Aufbaus (13) und die beiden Auflager (19, 20) an dem gegenüberliegenden Endbereich des Aufbaus (13) angeordnet sind.

3. Lastfahrzeug (1) nach Anspruch 1 oder 2, **dadurch gekennzeichnet, daß** der Aufbau (13) an wenigstens vier Punkten über Bewegungslager mit dem Hilfsrahmen (10) verbunden ist, daß dazu ein erstes Schwenklager (17) am vorderen Endbereich des Aufbaus (13) und ein zweites Schwenklager (18) am hinteren Endbereich des Aufbaus (13) angeordnet ist, daß die Schwenkachsen dieser Schwenklager (17, 18) zueinander fluchten und jeweils etwa in der Fahrzeuglängsmittelachse (21) verlaufen, und daß zwischen diesen Schwenklagern (17, 18) in Fahrzeuglängsrichtung etwa mittig zum Aufbau (13) die wenigstens zwei Auflager (19, 20) angeordnet sind.

4. Lastfahrzeug (1) nach einem der Ansprüche 1 bis 3, **dadurch gekennzeichnet, daß** die rohrförmigen Hohlprofile (15) als Kastenprofile ausgebildet sind, die jeweils ein an ihrem Umfang offenes Hohlprofilteil aufweisen, das vorzugsweise im Querschnitt etwa U-, V- oder trapezförmig ausgebildet ist, und daß diese Kastenprofilteile (15) an ihren Längsrändern vorzugsweise durch Schweißnähte mit der Bodenplatte (14) zu einem in Umfangsrichtung geschlossenen Hohlprofil verbunden sind.

5. Lastfahrzeug (1) nach einem der Ansprüche 1 bis 4, **dadurch gekennzeichnet, daß** sich der Querschnitt wenigstens eines Hohlprofils (15) ausgehend vom unteren zum oberen Ende des Hohlprofils (15) erweitert und daß dazu wenigstens ein Längsseitenwandbereich des Hohlprofils (15) schräg zur Erstreckungsebene des Aufbaus (13) angeordnet ist.

6. Lastfahrzeug (1) nach einem der Ansprüche 1 bis 5, **dadurch gekennzeichnet, daß** die Hohlprofile (15) durch Quertraversen (16a, 16b) miteinander verbunden sind und daß die Quertraversen (16a, 16b) vorzugsweise an den Bewegungslagern angeordnet sind.

7. Lastfahrzeug (1) nach einem der Ansprüche 1 bis 6, **dadurch gekennzeichnet, daß** wenigstens eine an einem Schwenklager (17, 18) angeordnete Quertraverse (16a) an ihren mit den Hohlprofilen (15) verbundenen Endbereichen unterseitig Aussparungen (27) aufweist, in die ein darunter befindlicher Teilbereich des Hilfsrahmens (10) beim Verwinden von Fahrgestellrahmen (2) und Hilfsrahmen (10) verschwenkbar ist, und daß ein zwischen diesen Aussparungen (27) angeordneter Basisbereich (28) der Quertraverse (16a) mit dem Lageroberteil (25) des Schwenklagers (17, 18) verbunden ist.

8. Lastfahrzeug (1) nach einem der Ansprüche 1 bis 7, **dadurch gekennzeichnet, daß** wenigstens eine an den Auflagern (19, 20) angeordnete Quertraverse (16b) an ihren mit den Hohlprofilen (15) verbundenen Endbereichen unterseitig Aussparungen (27) aufweist und daß die Auflager (19, 20) in diesen Aussparungen (27) angeordnet sind.

9. Lastfahrzeug (1) nach einem der Ansprüche 1 bis 8, **dadurch gekennzeichnet, daß** der Basisbereich (28) der Quertraverse(n) (16a, 16b) oder dessen Projektion in eine orthogonal zur Fahrzeuglängsrichtung verlaufende Ebene sich etwa trapezförmig nach unten verjüngt.

10. Lastfahrzeug (1) nach einem der Ansprüche 1 bis 9, **dadurch gekennzeichnet, daß** das wenigstens eine Schwenklager (17, 18) und/oder ein Auflager (19, 20) ein mit dem Hilfsrahmen (10) verbundenes Lagerunterteil (26, 51) und ein mit dem Aufbau (13) verbundenes Lageroberteil (25, 50) aufweist, und daß der Aufbau (13) über wenigstens einen, vorzugsweise das Lageroberteil (25, 50) und das Lagerunterteil (26, 51) durchsetzenden, durch die Vorspannkraft einer Feder (40, 56) belasteten Zuganker (39, 55) auf den Hilfsrahmen (10) niedergespannt ist.

11. Lastfahrzeug (1) nach einem der Ansprüche 1 bis 10, **dadurch gekennzeichnet, daß** zwischen dem Lageroberteil (25, 50) und dem Lagerunterteil (26, 51) wenigstens eine, vorzugsweise von dem Zuganker (39, 55) durchsetzte elastomere Zwischenlage (31, 53) angeordnet ist.

12. Lastfahrzeug (1) nach einem der Ansprüche 1 bis 11, **dadurch gekennzeichnet, daß** die Feder (40, 56) wenigstens ein elastomeres Federelement (42, 58) und/oder wenigstens ein Teller-Federelement (41, 57) aufweist, und daß der Zuganker (39, 55) vorzugsweise das (die) Federelement(e) (42, 58) durchsetzt.

13. Lastfahrzeug (1) nach einem der Ansprüche 1 bis 12, **dadurch gekennzeichnet, daß** das Lageroberteil (25) und das Lagerunterteil (26) der Schwenklagerung jeweils einen etwa parallel zur Bodenplatte (14) verlaufenden plattenförmigen Lagerabschnitt (32, 33) aufweist, an den sich in Schwenkrichtung seitlich beidseits jeweils nach unten oder oben abgewinkelte plattenförmige Seitenflansche (34, 35, 36, 37) anschließen, daß zwischen den plattenförmigen Lagerabschnitten (32, 33) und den Seitenflanschen (34, 35, 36, 37) von Lageroberteil (25) und Lagerunterteil (26) die wenigstens eine elastische Zwischenlage (31) vorgesehen ist, und daß zwischen dieser und wenigstens zwei der seitlich beidseits der beiden plattenförmigen Lagerabschnitte (32, 33) angeordneten Seitenflansche (34, 35, 36, 37) jeweils ein sich nach außen erweiternder Keilspalt vorgesehen ist.

14. Lastfahrzeug (1) nach einem der Ansprüche 1 bis 13, **dadurch gekennzeichnet, daß** an wenigstens zwei einander gegenüberliegenden Seitenrandbereichen des elastomeren Federelements (42, 58) und/oder der elastomeren Zwischenlage (31, 53) Seitenbegrenzungsanschläge (60, 61, 62) für das elastomere Federelement (42, 58) und/oder die elastomere Zwischenlage (31, 53) angeordnet sind, die jeweils mit dem Lageroberteil (25, 50) oder dem Lagerunterteil (26, 51) verbunden sind.

15. Lastfahrzeug (1) nach einem der Ansprüche 1 bis 14, **dadurch gekennzeichnet, daß** wenigstens ein Schwenklager (17, 18) und/oder wenigstens ein Auflager (19, 20) als Hülsenfeder ausgebildet ist, vorzugsweise als Gummi-Metall-Lager.

16. Lastfahrzeug (1) nach einem der Ansprüche 1 bis 15, **dadurch gekennzeichnet, daß** die durch die Quertraversen (16a, 16b) miteinander verbunden Hohlprofile (15) an den Längsaußenrändern des Aufbaus (13) angeordnet sind.

## Claims

1. Heavy goods vehicle (1) having a flexurally rigid but torsionally soft bogie frame (2) on which is mounted a twistable auxiliary frame (10) which carries a flexurally and torsionally rigid superstructure (13) comprising a base plate (14) and/or transverse members(16a, 16b), which comprises, in order to improve its torsional rigidity, a tubular hollow profile (15) extending in the longitudinal direction of the vehicle, said superstructure (13) being attached to the auxiliary frame (10) at at least three points via motion bearings, at least one of these motion bearings being in the form of a swivel bearing (17, 18), the swivel axis of which extends substantially along the central longitudinal axis (21) of the vehicle, and at least two of the motion bearings being in the form of supports (19, 20) which are disposed laterally on both sides of the swivel axis and are spaced from the swivel bearing (17, 18) in the longitudinal direction of the vehicle, **characterised in that** the superstructure (13) comprises at least two of the tubular hollow profiles (15) extending in the longitudinal direction of the vehicle, which are laterally spaced from one another and are joined together via the base plate (14) and/or the transverse members (16a, 16b), and **in that** the gap formed between these hollow profiles (15) constitutes a manoeuvring space for accommodating parts of the auxiliary frame (10) during the relative movement which occurs during torsion of the bogie frame (2) and auxiliary frame (10) between the latter and the superstructure (13).

2. Heavy goods vehicle (1) according to claim 1, **characterised in that** the superstructure (13) is attached to the auxiliary frame (10) at three points via motion bearings, **in that** the swivel bearing (17, 18) is mounted at the front or rear end region of the superstructure (13) and the two supports (19, 20) are mounted at the opposite end region of the superstructure (13).

3. Heavy goods vehicle (1) according to claim 1 or 2, **characterised in that** the superstructure (13) is attached to the auxiliary frame (10) at at least four points via motion bearings, **in that** for this purpose a first swivel bearing (17) is mounted at the front end region of the superstructure (13) and a second swivel bearing (18) is mounted at the rear end region of the superstructure (13), **in that** the swivel axes of these swivel bearings (17, 18) are aligned with one another, and that the minimum of two supports (19, 20) are mounted between these swivel bearings (17, 18) in the longitudinal direction of the vehicle substantially centrally with respect to the superstructure (13).

4. Heavy goods vehicle (1) according to one of claims 1 to 3, **characterised in that** the tubular hollow profiles (15) are constructed as box profiles each of which has a hollow profile member open at its periphery, which is preferably substantially U-shaped, V-shaped or trapezoidal in cross section, and **in that** these box profile members (15) are preferably connected to the base plate (14) by weld seams at their longitudinal edges to form a hollow profile which is closed off in the circumferential direction.

5. Heavy goods vehicle (1) according to one of claims 1 to 4, **characterised in that** the cross section of at least one hollow profile (15) widens out from the lower to the upper end of the hollow profile (15) and **in that** for this purpose at least one region of the longitudinal side wall of the hollow profile (15) is arranged diagonally with respect to the plane of extension of the superstructure (13).

6. Heavy goods vehicle (1) according to one of claims 1 to 5, **characterised in that** the hollow profiles (15) are joined together by transverse members (16a, 16b) and **in that** the transverse members (16a, 16b) are preferably mounted on the motion bearings.

7. Heavy goods vehicle (1) according to one of claims 1 to 6, **characterised in that** at least one transverse member (16a) mounted on a swivel bearing (17, 18) comprises, on its underside, at its end regions connected to the hollow profiles (15), recesses (27) into which a part of the auxiliary frame (10) located underneath can be swivelled during the twisting of the bogie frame (2) and auxiliary frame (10), and **in that** a base region (28) of the transverse member (16a), arranged between these recesses (27), is connected to the upper bearing part (25) of the swivel bearing (17, 18).

8. Heavy goods vehicle (1) according to one of claims 1 to 7, **characterised in that** at least one transverse member (16b) mounted on the supports (19, 20) comprises recesses (27), on its underside, at its end regions connected to the hollow profiles (15), and **in that** the supports (19, 20) are arranged in these recesses (27).

9. Heavy goods vehicle (1) according to one of claims 1 to 8, **characterised in that** the base region (28) of the transverse member(s) (16a, 16b) or the projection thereof into a plane extending perpendicularly to the longitudinal direction of the vehicle tapers downwards in a substantially trapezoidal shape.

10. Heavy goods vehicle (1) according to one of claims 1 to 9, **characterised in that** the minimum of one swivel bearing (17, 18) and/or one support (19, 20) comprises a lower bearing part (26, 51) attached to the auxiliary frame (10) and an upper bearing part (25, 50) attached to the superstructure (13), and **in that** the superstructure (13) is braced down onto the auxiliary frame (10) by means of at least one tie bar (39, 55) preferably passing through the upper bearing part (25, 50) and the lower bearing part (26, 51) and subjected to the biasing force of a spring (40, 56).

11. Heavy goods vehicle (1) according to one of claims 1 to 10, **characterised in that** between the upper bearing part (25, 50) and the lower bearing part (26, 51) is provided at least one elastomeric intermediate layer (31, 53) through which the tie bar (39, 55) preferably passes.

12. Heavy goods vehicle (1) according to one of claims 1 to 11, **characterised in that** the spring (40, 56) comprises at least one elastomeric spring element (42, 58) and/or at least one plate spring element (41, 57), and **in that** the tie bar (39, 55) preferably passes through the spring element(s) (42, 58).

13. Heavy goods vehicle (1) according to one of claims 1 to 12, **characterised in that** the upper bearing part (25) and the lower bearing part (26) of the swivel bearing each have a plate-shaped bearing portion (32, 33) extending substantially parallel to the base plate (14), adjoining which are plate-shaped side flanges (34, 35, 36, 37) bent downwards or upwards on both sides in the direction of swivelling, **in that** between the plate-shaped bearing portions (32, 33) and the side flanges (34, 35, 36, 37) of the upper bearing part (25) and lower bearing part (26) is provided the minimum of one elastic intermediate layer (31) and **in that** between this and at least two of the side flanges (34, 35, 36, 37) disposed laterally on both sides of the two plate-shaped bearing portions (32, 33) is provided in each case an outwardly widening wedge-shaped gap.

14. Heavy goods vehicle (1) according to one of claims 1 to 13, **characterised in that** lateral limit stops (60, 61, 62) for the elastomeric spring element (42, 58) and/or the elastomeric intermediate layer (31, 53) are disposed on at least two opposing side edge regions of the elastomeric spring element (42, 58) and/or the elastomeric intermediate layer (31, 53), said lateral limit stops (60, 61, 62) each being connected to the upper bearing part (25, 50) or lower bearing part (26, 51).

15. Heavy goods vehicle (1) according to one of claims 1 to 14, **characterised in that** at least one swivel bearing (17, 18) and/or at least one support (19, 20) is constructed as a sleeve spring, preferably as a rubber/metal bearing.

16. Heavy goods vehicle (1) according to one of claims 1 to 15, **characterised in that** the hollow profiles (15) joined together by the transverse members (16a, 16b) are mounted on the outer longitudinal edges of the superstructure (13).

## Revendications

1. Camion (1) comprenant un cadre de châssis (2), résistant à la flexion mais à déformation souple, sur lequel est disposé un cadre auxiliaire (10) déformable, qui supporte une structure (13) résistante à la flexion et à la déformation, comprenant une plaque de fond (14) et/ou des traverses transversales (16a, 16b), laquelle structure, pour améliorer sa résistance à la torsion, comprend un profilé creux tubulaire (15) s'étendant dans la direction longitudinale du véhicule, la structure (13) étant reliée à au moins trois points du cadre auxiliaire (10) par des paliers mobiles, au moins un de ces paliers mobiles étant conçu comme un palier pivotant (17, 18), dont l'axe de pivotement s'étend approximativement dans l'axe longitudinal central du véhicule (21), et au moins deux des paliers mobiles étant conçus comme des appuis (19, 20), qui sont disposés latéralement de part et d'autre de l'axe de pivotement et sont distants dans la direction longitudinale du véhicule du palier pivotant (17, 18), **caractérisé en ce que** la structure (13) comprend au moins deux des profilés creux tubulaires (15) s'étendant dans la direction longitudinale du véhicule, lesquels profilés sont distants latéralement l'un de l'autre et sont reliés l'un à l'autre par la plaque de fond (14) et/ou les traverses transversales (16a, 16b), et **en ce que** l'espace intermédiaire formé entre ces profilés creux (15) est conçu comme un espace de liberté de mouvement destiné à recevoir des zones partielles du cadre auxiliaire (10) à l'occasion du déplacement relatif se produisant lors de la déformation du cadre de châssis (2) et du cadre auxiliaire (10) entre celui-ci et la structure (13).

2. Camion (1) selon la revendication 1,
**caractérisé en ce que** la structure (13) est reliée en trois points au cadre auxiliaire (10) par des paliers mobiles, **en ce que** le palier pivotant (17, 18) est disposé sur la zone d'extrémité avant ou arrière de la structure (13) et les deux appuis (19, 20) sur la zone d'extrémité opposée de la structure (13).

3. Camion (1) selon la revendication 1 ou 2, **caractérisé en ce que** la structure (13) est reliée au moins en quatre points au cadre auxiliaire (10) par des paliers mobiles, **en ce qu'**à cet effet, un premier palier pivotant (17) est disposé sur la zone d'extrémité avant de la structure (13) et un second palier pivotant (18) sur la zone d'extrémité arrière de la structure (13), **en ce que** les axes de pivotement de ces paliers pivotants (17, 18) sont mutuellement alignés et s'étendent respectivement approximativement dans l'axe longitudinal central de véhicule (21), et **en ce que** les au moins deux appuis (19, 20) sont disposés entre ces paliers pivotants (17, 18) dans la direction longitudinale du véhicule approximativement au centre par rapport à la structure (13).

4. Camion (1) selon l'une quelconque des revendications 1 à 3, **caractérisé en ce que** les profilés creux tubulaires (15) sont conçus comme des profilés en caisson, qui comprennent respectivement une partie de profilé creux ouverte sur sa périphérie, qui est conçue de préférence en section transversale approximativement en forme de U, de V ou de trapèze, et **en ce que** ces parties de profilé en caisson (15) sont reliées sur leurs bords longitudinaux à la plaque de fond (14), de préférence par des joints soudés, pour former un profilé creux fermé dans la direction périphérique.

5. Camion (1) selon l'une quelconque des revendications 1 à 4, **caractérisé en ce que** la section transversale d'au moins un profilé creux (15) s'élargit de l'extrémité inférieure à l'extrémité supérieure du profilé creux (15) et **en ce que**, à cet effet, au moins une zone de paroi latérale longitudinale du profilé creux (15) est disposée de façon oblique par rapport au plan d'extension de la structure (13).

6. Camion (1) selon l'une quelconque des revendications 1 à 5, **caractérisé en ce que** les profilés creux (15) sont reliés les uns aux autres par des traverses transversales (16a, 16b) et **en ce que** les traverses transversales (16a, 16b) sont disposées de préférence sur les paliers mobiles.

7. Camion (1) selon l'une quelconque des revendications 1 à 6, **caractérisé en ce qu'**au moins une traverse transversale (16a) disposée sur un palier pivotant (17, 18) comprend côté inférieur, sur ses zones d'extrémité reliées aux profilés creux (15), des évidements (27), dans lesquels une zone partielle du cadre auxiliaire (10) située dessous peut pivoter à l'occasion d'une déformation du cadre de châssis (2) et du cadre auxiliaire (10), et **en ce qu'**une zone de base (28) de la traverse transversale (16a) disposée entre ces évidements (27) est reliée à la partie supérieure de palier (25) du palier pivotant (17, 18).

8. Camion (1) selon l'une quelconque des revendications 1 à 7, **caractérisé en ce qu'**au moins une traverse transversale , (16b) disposée sur les appuis (19, 20) comprend côté inférieur, sur ses zones d'extrémité reliées aux profilés creux (15) des évidements (27), et **en ce que** les appuis (19, 20) sont disposés dans ces évidements (27).

9. Camion (1) selon l'une quelconque des revendications 1 à 8, **caractérisé en ce que** la zone de base (28) de la (des) traverse(s) transversale(s) (16a, 16b) ou de sa projection se rétrécit vers le bas sensiblement en forme de trapèze dans un plan s'étendant perpendiculairement à la direction longitudinale du véhicule.

10. Camion (1) selon l'une quelconque des revendications 1 à 9, **caractérisé en ce que** le au moins un palier pivotant (17, 18) et/ou un appui (19, 20) comprennent une partie inférieure de palier (26, 51) reliée au cadre auxiliaire (10) et une partie supérieure de palier (25, 50) reliée à la structure (13), et **en ce que** la structure (13) est tendue vers le bas sur le cadre auxiliaire (10) par au moins un tirant d'ancrage (39, 55) traversant de préférence la partie supérieure de palier (25, 50) et la partie inférieure de palier (26, 51), sollicité par la force de précontrainte d'un ressort (40, 56).

11. Camion (1) selon l'une quelconque des revendications 1 à 10, **caractérisé en ce qu'**au moins une couche intermédiaire (31, 53) élastomère, traversée de préférence par le tirant d'ancrage (39, 55), est disposée entre la partie supérieure de palier (25, 50) et la partie inférieure de palier (26, 51).

12. Camion (1) selon l'une quelconque des revendications 1 à 11, **caractérisé en ce que** le ressort (40, 56) comprend au moins un élément formant ressort élastomère (42, 58) et/ou au moins une rondelle Belleville (41, 57), et **en ce que** le tirant d'ancrage (39, 55) traverse de préférence le ou les élément(s) formant ressort (42, 58).

13. Camion (1) selon l'une quelconque des revendications 1 à 12, **caractérisé en ce que** la partie supérieure de palier (25) et la partie inférieure de palier (26) du palier pivotant comprennent respectivement une section de palier (32, 33) en forme de plaque s'étendant approximativement parallèlement à la plaque de fond (14), section à laquelle se raccordent des brides latérales (34, 35, 36, 37) en forme de plaque coudées respectivement vers le bas ou vers le haut latéralement des deux côtés dans la direction de pivotement, **en ce que** la au moins une couche intermédiaire élastique (31) est prévue entre les sections de palier en forme de plaque (32, 33) et les brides latérales (34, 35, 36, 37) de la partie supérieure de palier (25) et de la partie inférieure de palier (26), et **en ce qu'**il est prévu respectivement une fente cunéiforme s'élargissant vers l'extérieur entre ladite couche et au moins deux des brides latérales (34, 35, 36, 37) disposées latéralement de part et d'autre des deux sections de palier (32, 33) en forme de plaque.

14. Camion (1) selon l'une quelconque des revendications 1 à 13, **caractérisé en ce que** des butées de délimitation latérale (60, 61, 62) pour l'élément formant ressort élastomère (42, 58) et/ou la couche intermédiaire élastomère (31, 50), qui sont reliées respectivement à la partie supérieure de palier (25, 50) ou à la partie inférieure de palier (26, 51), sont disposées sur au moins deux zones latérales opposées l'une à l'autre de l'élément formant ressort élastomère (42, 58) et/ou de la couche intermédiaire élastomère (31, 53).

15. Camion (1) selon l'une quelconque des revendications 1 à 14, **caractérisé en ce qu'**au moins un palier pivotant (17, 18) et/ou au moins un appui (19, 20) sont conçus comme des ressorts à gaine, de préférence comme des paliers en caoutchouc et en métal.

16. Camion (1) selon l'une quelconque des revendications 1 à 15, **caractérisé en ce que** les profilés creux (15) reliés les uns aux autres par les traverses transversales (16a, 16b) sont disposés sur les bords extérieurs longitudinaux de la structure (13).
